# EUROPÄISCHE PATENTSCHRIFT

(11) **EP 2 038 642 B1**
(45) Veröffentlichungstag und Bekanntmachung des Hinweises auf die Patenterteilung: **05.03.2014**
(21) Anmeldenummer: 07785998.1
(22) Anmeldetag: 11.07.2007
(51) Int. Cl.: G01N 23/04, H01J 35/14

(54) **ANORDNUNG ZUR ERZEUGUNG ELEKTROMAGNETISCHER STRAHLUNG UND VERFAHREN ZUM BETREIBEN DER ANORDNUNG**
ARRANGEMENT FOR PRODUCING ELECTROMAGNETIC RADIATION AND METHOD FOR OPERATING SAID ARRANGEMENT
SYSTÈME POUR GÉNÉRER UN RAYONNEMENT ÉLECTROMAGNÉTIQUE ET PROCÉDÉ POUR FAIRE FONCTIONNER CE SYSTÈME

(30) Priorität: 11.07.2006 DE 102006032607
(43) Veröffentlichungstag der Anmeldung: 25.03.2009
(73) Patentinhaber: Carl Zeiss Industrielle Messtechnik GmbH, 73447 Oberkochen (DE)
(72) Erfinder: ERLER, Marco, 73447 Oberkochen (DE)
(74) Vertreter: Brunotte, Joachim Wilhelm Eberhard
(86) Internationale Anmeldenummer: PCT/EP2007/006163
(87) Internationale Veröffentlichungsnummer: WO 2008/006569

(56) Entgegenhaltungen:
- EP-A- 1 501 339
- JP-A- 58 048 399
- US-A- 5 020 086
- VAIDYA P R ET AL: "Determination of microfocus X-ray focal spot size using electron beam damageon the target" MATERIALS EVALUATION, COLUMBUS, OH, US, Bd. 59, Nr. 8, August 2001 (2001-08), Seiten 967-970, XP008087354 ISSN: 0025-5327
- FLUKE BIOMEDICAL: "Nuclear Associates - Radiographic and mammographic focal spot measurements products" INTERNET CITATION, [Online] März 2005 (2005-03), XP007903822 Gefunden im Internet: URL:http://assets.fluke.com/manuals/Nuclea r_umeng0200.pdf> [gefunden am 2008-01-14]

## Beschreibung

Die Erfindung betrifft eine Anordnung zur Erzeugung elektromagnetischer Strahlung, insbesondere von Röntgenstrahlung oder extremer Ultraviolett-Strahlung, sowie ein Verfahren zum Betreiben einer solchen Anordnung. Unter Röntgenstrahlung und extremer Ultraviolett-Strahlung wird in dieser Beschreibung elektromagnetische Strahlung verstanden, die durch Beschleunigung (Abbremsung) von Teilchen in einem Brennfleck eines Targets entsteht. Die spektralen Bereiche von Röntgenstrahlung und extremer Ultraviolett-Strahlung sind nicht durch bestimmte Wellenlängen oder Photonenenergien beschränkt.

Die Erfindung betrifft insbesondere auch das Gebiet der Untersuchung von industriell und/oder handwerklich hergestellten Gegenständen mittels elektromagnetischer Strahlung. Beispielsweise ist es bekannt, ein Werkstück mit Röntgenstrahlung zu durchstrahlen und ein Röntgenbild aufzunehmen, den Vorgang bei verschiedenen Einfallsrichtungen der Röntgenstrahlung zu wiederholen und anschließend durch einen Computer dreidimensionale, rekonstruierte Röntgenbilder des Werkstücks zu erzeugen. Die Rekonstruktion am Computer wird als Computer-Tomographie (CT) bezeichnet.

Insbesondere kann es sich bei einer Strahlungserzeugungseinrichtung der erfindungsgemäßen Anordnung um eine Mikrofokus-Röntgenröhre handeln.

Insbesondere bei Mikrofokus-Röntgenröhren ist die Größe des Brennflecks, in dem auftreffende Teilchen (meist Teilchen eines Elektronenstrahls) die Röntgenstrahlung erzeugen, zeitlich nicht konstant. Der Brennfleck vergrößert sich in der Regel mit fortschreitender Zeit. Bei der CT sind aber hohe Leistungen der für die Erzeugung der Röntgenstrahlen oder anderen kurzwelligen elektromagnetischen Strahlen verwendeten Röhren erwünscht. Als Faustregel gilt, dass die Zeit für die Aufnahme der Röntgenbilder halbiert werden kann, wenn die Strahlungsleistung der Röhre verdoppelt wird. Mit zunehmender Größe des Brennflecks wird aber die örtliche Auflösung in Bildern verschlechtert, die mit einer idealer Weise punktförmigen Röntgenquelle erzielt werden könnte. Die zeitliche Änderung der Größe des Brennflecks soll daher verhindert werden.

US 2001/0050972 A1 beschreibt einen Röntgenstrahlungsgenerator, der in der Lage ist, einen Energiestrahl, z.B. einen Elektronenstrahl, automatisch zu fokussieren. Laut der Beschreibung der Druckschrift besteht ein enger Zusammenhang zwischen Konvergenzbedingungen eines Energiestrahls und der Oberflächentemperatur des Targets der Röntgenröhre. Daher wird in der Druckschrift vorgeschlagen, die Temperaturänderungen in Echtzeit zu messen und den Stromwert einer Fokussierungsspule automatisch zu steuern.

Es erscheint jedoch offen zu sein, wie aussagekräftig die Temperatur des Targets für die Fokussierung der Teilchen (darunter werden insbesondere Elektronen oder Quanten einer elektromagnetischen Strahlung verstanden) sind. Zwar bestätigen Erkenntnisse des Erfinders eine Abhängigkeit der Fokussierung von der Temperatur einer Röntgenröhre. Jedoch kann die Fokussierung außer von der Targettemperatur auch von anderen Einflussfaktoren abhängen, z.B. davon, wie und wie effektiv das Target gekühlt wird.

Das in US 2001/0050972 A1 beschriebene Verfahren setzt außerdem voraus, dass die optimale Brennfleckgröße bzw. die optimale Fokussierung zu Beginn des Betriebes der Röntgenröhre auf andere Weise gefunden wurde. Die Beobachtung der Temperaturänderung des Targets ergibt keine Informationen hierfür.

Außerdem kann sich die optimale Fokussierung in verschiedenen, Betriebsbereichen und/oder bei verschiedenen Betriebsarten der Strahlungserzeugungseinrichtung unterscheiden.

Die JP 58048399 A beschreibt, dass die Kathodenstruktur einer Röntgenröhre dadurch gebildet ist, dass das Filament durch eine einen Elektronenstrahl fokussierende externe Struktur umgeben ist. Die Röntgenröhre wird in Bezug auf die Fokussierung u.a. abhängig von einer Bedingung eingestellt, wobei die Bedingung Bedingungen eines fotografierten Objekts, einer Entfernung zwischen der Röntgenröhre und dem fotografierten Objekt und einer Entfernung zwischen der Röntgenröhre und einem Film einschließt.

Die EP 1 501 339 A1 beschreibt eine Vorrichtung zum Einstellen einer Röntgenröhre. Ein, anfängliches Bild einer Schlitzplatte, welches mit der Röntgenröhre aufgenommen wurde, wird gespeichert. Später, z.B: wenn Teile der Röntgenröhre ausgetauscht worden sind, wird erneut ein Bild der Schlitzplatte aufgenommen, wird das Bild über Telekommunikationsmittel zu einem Ort übertragen, an dem das anfängliche Bild gespeichert ist, werden die Bilder verglichen und wird der Fokus-Durchmesser eines Elektronenstrahls am Target der Röntgenröhre so eingestellt, dass er einem vorbestimmten Wert entspricht.

Die US 5,020,086 beschreibt ein Röntgensystem vom Mikrofokus-Typ, bei dem der Elektronenstrahlstrom im mA-Bereich bei konstanter Leistung betrieben wird und der Strahl zum Einstellen einer ausgewählten Strahlbreite und zum Steuern der Richtung elektronisch fokussiert wird. Der Betrieb der Röntgenröhre ist im Wesentlichen einstellbar durch Einstellen einer Kathoden-Leistungsversorgung. Die Größe der Spannung, die durch die Leistungsversorgung bereitgestellt wird, wird durch einen Spannungsdetektor detektiert und der Strom durch einen Stromdetektor, der in Reihe mit dem Ausgang der Leistungsversorgung liegt. Die Ausgänge des Spannungsdetektors und des Stromdetektors werden einem Leistungsdetektor zugeführt, der als Ausgangssignal das Produkt aus Strom und Spannung bereitstellt und somit die Leistung des Elektronenstrahl-Kreises. Dieses Leistungs-Ausgangssignal wird einer Steuergitter-Steuerung zugeführt, welche eine Steuergitter-Leistungsversorgung steuert, um die Ablenkungsspannung als direkte Funktion der Leistung, welche auf den Strahl angewendet wird, zu steuern.

Aufgabe der vorliegenden Erfindung ist es daher, eine Anordnung zur Erzeugung elektromagnetischer Strahlung sowie ein Verfahren zum Betreiben einer solchen Anordnung anzugeben, die unter verschiedenen Betriebsbedingungen eine automatische Einstellung der Brennfleckgröße ermöglicht. Insbesondere soll die örtliche Auflösung in einem Durchstrahlungsbild, das unter Nutzung der erzeugten elektromagnetischen Strahlung von einem Objekt aufgenommen werden kann, eingestellt und vorzugsweise auf einen vorgegebenen Wert und/oder auf das Maximum geregelt werden können.

Erfindungsgemäss wird eine Anordnung gemäss dem Wortlaut nach Anspruch 8 sowie ein Verfahren gemäss dem Wortlaut nach Anspruch 1 vorgeschlagen.

Es wird vorgeschlagen, zumindest ein Objekt, insbesondere zumindest ein spezielles Kalibrierobjekt, im Strahlengang der erzeugten elektromagnetischen Strahlung anzuordnen, so dass das Objekt (oder die Objekte) von der elektromagnetischen Strahlung durchstrahlt wird. Ferner wird ein Durchstrahlungsbild des Objekts oder der Objekte aufgenommen. Optional können weitere Durchstrahlungsbilder des oder der Objekte aufgenommen werden. Das oder die Durchstrahlungsbilder werden automatisch ausgewertet und eine Fokussierungseinrichtung wird in Abhängigkeit von der Auswertung eingestellt. Die Fokussierungseinrichtung lenkt die Teilchen auf ein Target der Strahlungserzeugungseinrichtung, so dass durch die Teilchen in dem Target die elektromagnetische Strahlung erzeugt wird. Auf diese Weise entsteht ein in sich geschlossener Wirkungskreislauf, der bevorzugtermaßen so betrieben wird, dass die Fokussierungseinrichtung die Stelleinrichtung eines Regelungskreises ist. Dabei kann für die in dem Durchstrahlungsbild zu erzielende örtliche Auflösung und/oder für einen Bildkontrast des Durchstrahlungsbildes ein Wert vorgegeben werden, auf den die tatsächlich erzielte örtliche Auflösung und/oder der tatsächlich erzielte Bildkontrast geregelt wird. Alternativ oder zusätzlich kann das Maximum der örtlichen Auflösung (d. h. die feinste Auflösung) und/oder das Maximum des Bildkontrastes vorgegeben sein oder es kann automatisch durch Variation der Einstellung der Fokussierungseinrichtung das Maximum der örtlichen Auflösung und/oder des Bildkontrastes ermittelt werden.

Die örtliche Auflösung (oder Auflösungsvermögen) kann als Fähigkeit definiert werden, vorgegebene kleinste Strukturen noch wiedergeben zu können. Das Auflösungsvermögen einer Bild Aufnahmevorrichtung kann mit der Modulationsübertragungsfunktion (englisch: Modulation Transfer Function, MTF) angegeben werden. Zur Ermittlung der Auflösung, können Bildaufnahmen von Strichmustern oder anderen vordefinierten Strukturen mit angefertigt werden. Vorzugsweise wird die Auflösung jedoch, wie noch näher an einem Ausführungsbeispiel beschrieben wird, nur indirekt über die Änderungsrate von Bildwerten (z. B. Grauwerten) in einer Auswertungsrichtung bestimmt.

Im Fall digitaler Durchstrahlungsbilder ergibt sich aus der Pixelgröße der Bildaufnahmeeinrichtung und aus der Vergrößerung des Objektes die minimale (tolerierbare) örtliche Auflösung in dem Durchstrahlungsbild, die einer bestimmten Brennfleckgröße bzw. Strahldichte der elektromagnetischen Strahlung entspricht. Diese minimale (schlechteste) Auflösung, oder eine bessere Auflösung können zum Beispiel vorgegeben werden. Dabei wird vorzugsweise auch berücksichtigt, dass bei einer zu kleinen Brennfleckgröße das Target beschädigt werden kann. Es existiert daher ein Bereich für die Auflösung, der nach unten (schlechteste tolerierbare Auflösung) und nach oben (beste, feinste Auflösung ohne Beschädigung) begrenzt sein kann. Wenn zumindest die schlechteste Auflösung erzielt wird, wirkt die Strahlungsquelle nicht einschränkend für die Auflösung und damit für die Information, die in einem digitalen Bild erfasst wird. Der Bereich der besten Auflösung ist in der Regel durch die Belastungsgrenze des Targets, d.h. der Leistung der auf das Target einfallenden Teilchen, gegeben. Diese Betrachtungen gelten für einen Aufnahmezeitraum fester Länge. Wenn der Aufnahmezeitraum verlängert wird, kann bei gleicher Ausleuchtung der Bildaufnahmeeinrichtung die Targetleistung proportional reduziert werden, mit der Folge, dass eine höhere Auflösung erzielt werden kann, wenn die durch die Pixelgröße gegebene Grenze der Auflösung noch nicht erreicht ist. Umgekehrt kann durch eine höhere Leistung der Aufnahmezeitraum verkürzt werden. Da mit der vorliegenden Erfindung die maximale (beste) Auflösung neu eingestellt und/oder über einen Zeitraum beibehalten werden kann, kann der Aufnahmezeitraum so weit wie möglich verkürzt werden.

Insbesondere wird der vorgegebene Wert und/oder das Maximum (vorzugsweise mehrfach wiederholt) während des Betriebes der Anordnung überprüft und die Fokussierungseinrichtung bei Bedarf nachgestellt, so dass der gewünschte Wert wieder erreicht wird. Hierzu kann wiederholt das spezielle Kalibrierobjekt in den Strahlengang der elektromagnetischen Strahlung eingebracht werden, wobei es insbesondere dann, wenn das Maximum eingestellt oder gefunden werden sollen, möglich ist, dass das eigentliche Messobjekt, das Gegenstand der Strahlenuntersuchung ist, im Strahlengang verbleibt.

Die Erfindung hat den Vorteil, dass die Einstellung der Fokussierungseinrichtung auf Basis von Informationen vorgenommen wird, die das Ergebnis sämtlicher Einflussfaktoren sind. Es wird also nicht lediglich die Temperatur des Targets berücksichtigt, sondern insbesondere auch die Abhängigkeit des Brennflecks von z.B. einer Beschleunigungsspannung und von dem Teilchenstrom der Röntgenröhre.

Außerdem kann sogar durch Auswertung des Durchstrahlungsbildes in verschiedenen Richtungen (z.B. sowohl in X-Richtung als auch in Y-Richtung eines kartesischen Koordinatensystems des Bildes) eine Einstellung der Fokussierungseinrichtung richtungsspezifisch vorgenommen werden, z.B. zum Ausgleich eines Astigmatismus. In diesem Fall kann die Fokussierungseinrichtung zumindest zwei einstellbare Parameter haben, z. B. die Spulenströme von zwei Spulen, wobei jede der Spulen die Brennfleckgröße selektiv oder überwiegend nur in einer von zwei verschiedenen Richtungen entlang der Oberfläche des Targets beeinflusst.

Durch die Erfindung kann auch noch ein weiteres Problem beim Betrieb von Strahlungserzeugungseinrichtungen, insbesondere von Röntgenröhren gelöst werden: Der Brennfleck im Target ist eine verkleinerte und unter Umständen leicht verzerrte Abbildung des Emissionsflecks am Heizfaden. Der Heizfaden ändert im Lauf seiner Lebensdauer seinen Querschnitt und damit seinen elektrischen Widerstand. Deshalb sollte der Strom durch den Heizfaden bestenfalls kontinuierlich, aber zumindest wiederholt nachgestellt werden. Wenn nicht über den gesamten Leistungsbereich des Heizfadens und damit des Teilchenstrahls korrekt nachgestellt, ergeben sich zwei Möglichkeiten.

Erstens kann der Heizfadenstrom zu hoch sein, sodass der Emissionsfleck zwar optimal klein bleibt, sich jedoch die Lebensdauer des Heizfadens unnötig veningert.

Zweitens kann der Heizfadenstrom zu klein sein. Daraus resultiert eine geringe Stromdichte der Elektronen emittierenden Fläche, mit der Folge, dass eine (z. B. als Wehneltzylinder ausgestaltete und) als elektrostatische Linse wirkende Gitterblende zwischen Heizfaden und Anode die Elektronen aus einer größeren Emissionsfläche nutzt. Der für die auf das Target einfallenden Elektronen wirksame Emissionsstrom kann daher über die Gitterblende geregelt bzw. eingestellt werden. Die Stromdichte der Elektronen, die den Emissionsfleck bilden (bzw. von diesem ausgehen) ist dann wegen des zu kleinen Heizfadenstroms (auf den Ort bezogen) ungleichmäßig. Außerdem kann der Emissionsfleck nicht sicher bestimmt und kontrolliert werden. Die Form des Brennflecks variiert in diesem Fall von Heizfaden zu Heizfaden und im Laufe des Lebens eines Heizfadens. Befindet sich der Heizfadenstrom dagegen im Optimum ist die Variation der Brennfleckform sehr gering.

Dieser ungleichmäßige und auch größere Emissionsfleck bedingt einen ungleichmäßigen und vergrößerten Brennfleck, der wiederum zu einer Verwaschung von Strukturen in dem aufgenommenen Bild führen kann (d.h. zu unschärferen Strukturen im Bild als im Objekt). Im schlechtesten Fall kann an Einzel- oder Gitterstrukturen eine Doppelabbildung registriert werden. Erfindungsgemäß kann dies mit Hilfe eines oder mehrerer Kalibrierobjekte erkannt und automatisch durch Auswertung zumindest eines Durchstrahlungsbildes und Einstellung des Heizfadenstroms korrigiert werden. Dabei weisen die Kalibrierobjekte insbesondere Strukturen auf (wie noch später beschrieben wird, z. B. Strukturen mit Strahlen eines Siemensstems), die eine sich kontinuierlich verändernde Strukturbreite haben (z. B. ändern sich Breite und Abstand der Strahlen von radial innen nach radial außen kontinuierlich). Es kann daher erkannt werden, dass bei einer bestimmten Strukturbreite Doppelbilder erzeugt werden.

Da der Heizfadenstrom in Verbindung mit der Gitterblende (oder einer anderen Einrichtung) zu einer ersten, anodenseitigen Fokussierung (Vorfokussierung) führt, die ihren Beitrag zu der Einstellung der optimalen Brennfleckgröße am Target liefert, werden
- eine Einstelleinrichtung zur Einstellung des Heizfadenstroms (oder zur Einstellung einer anderen Einrichtung zur Emission der Teilchen, die auf das Target eingestrahlt werden) und/oder
- eine Einstelleinrichtung zur Einstellung der Fokussierungswirkung der Gitterblende, der Lochblende oder einer anderen efektrostatischen Linse
auch als Fokussierungseinrichtung oder Teil(e) einer Fokussierungseinrichtung verstanden. Die Erfindung ist jedoch nicht auf eine Fokussierungseinrichtung mit einer solchen Einstelleinrichtung und auch nicht auf Röntgenröhren mit Gitterblende beschränkt. Vielmehr wird bei bestimmten Ausgestaltungen der Erfindung lediglich z. B. ein Magnetfeld (oder elektrisches Feld) eingestellt, das den bereits existierenden Teilchenstrahl fokussiert.

Die Fokussierung hat die Aufgabe den primären Brennfleck auf dem Heizfaden bis zum Target hin zu verkleinern. Dies wird in dem, zuvor beschriebenen Fall zum ersten durch die elektrostatische Fokussierung an der Kathode selbst erreicht. Die Gitterblende oder Lochblende, die z. B. als Wehneltzylinder ausgebildet ist, hat die Wirkung, dass die auf negativem Potential liegende Blende die Teilchen (Elektronen) abstößt und auf diese Weise bündelt, mit der Folge einer in der Anodenebene liegenden ersten Einschnürung des Teilchenstrahls ("Crossover"). Nach dieser Vorverkleinerung oder Vorfokussierung erfolgt hinter der Anode im E-Feld freien Bereich z. B. eine konventionelle magnetische Fokussierung.

Außerdem können bei einer Weiterbildung der Erfindung weitere Größen berücksichtigt werden, die auf das Durchstrahlungsbild Einfluss haben, wie z.B. der Fokus-Objekt-Abstand (FOD), der Fokus-Detektor-Abstand (FDD) und die Art des Targets. FOD und FDD bestimmen die geometrischen Verhältnisse. Unter Verwendung der geometrischen Verhältnisse und unter Verwendung der Information über die Größe eines Pixels in dem Durchstrahlungsbild kann die von der Strahlungsquelle erzeugte Auflösung bzw. Unschärfe (wie sie sich aus der Ortsauflösung ergibt) an die durch die geometrischen Verhältnisse und die Größe des Pixels bestimmte Größe eines Voxels nach einer CT-Rekonstruktion vorgegeben und/oder angepasst werden. Zur Anpassung wird die Fokussierungseinrichtung entsprechend eingestellt. Um die Einstellung vornehmen zu können, kann durch Auswertung des Durchstrahlungsbildes oder der Durchstrahlungsbilder eine zugeordnete Auflösung bestimmt werden und daraus, insbesondere unter Berücksichtigung einer vorgegebenen Relation zwischen der Vergrößerung und der Kantenlänge eines Pixels, die dem rekonstruierten Bild oder den rekonstruierten Bildern zugeordnete Voxelgröße berechnet werden. Stimmt diese Größe nicht mit der Vorgabe und/oder dem erreichbaren Minimum überein, kann die Fokussierungseinrichtung entsprechend eingestellt werden.

Nicht nur bei der in dem vorangegangenen Absatz beschriebenen Ausführungsform können bei der Einstellung der Fokussierungseinrichtung außer dem Ergebnis der Auswertung des oder der Bilder weitere Informationen berücksichtigt werden. Z.B. können die Beschleunigungsspannung und der Elektronenstrom einer Röntgenröhre und/oder die momentane Leistung der auf das Target auftreffenden Teilchen berücksichtigt werden. Alternativ oder zusätzlich können auch die Eigenschaften des Targets oder weiterer Teile der Strahlungserzeugungseinrichtung, wie z.B. einer Basis, an der das Target befestigt ist, und/oder eines Fensters, durch das die elektromagnetische Strahlung hindurchtritt, berücksichtigt werden. Alternativ oder zusätzlich zu den Sollwerten der Betriebsgrößen (z. B. Teilchenstrom, Beschleunigungsspannung) der Strahlungserzeugungseinrichtung können ganz oder teilweise Messwerte dieser Größen herangezogen werden. Weitere Sollgrößen oder Messgrößen, die bei der Einstellung berücksichtigt werden können, sind Größen, die den Zustand von anderen Teilen der Strahlungserzeugungseinrichtung, von Teilen der Anordnung zur Aufnahme der Durchstrahlungsbilder und deren Auswertung und/oder von Größen, die die Umgebung beschreiben, wie beispielsweise ein oder mehrere Temperaturen der Teile und/oder der Umgebung, definieren. Abhängigkeiten zwischen einer oder mehreren dieser Größen untereinander und/oder von dem Zustand der Fokussierungseinrichtung und/oder von der Brennfleckgröße können vorab festgestellt worden sein und beispielsweise in Form einer Tabelle oder mehreren Tabellen für die Einstellung der Fokussierungseinrichtung zur Verfügung stehen und benutzt werden.

Ein weiterer Aspekt der Erfindung betrifft ein Kalibrierobjekt, das für die Einstellung der Fokussierungseinrichtung genutzt werden kann. Das Kalibrierobjekt kann in den Strahlengang der elektromagnetischen Strahlung eingebracht werden, so dass es von dieser durchstrahlt wird und ein Durchstrahlungsbild aufgenommen wird. Durch Auswertung dieses Durchstrahlungsbildes oder einer Mehrzahl der Durchstrahlungsbilder können die für die Einstellung der Fokussierungseinrichtung benötigten Informationen gewonnen werden. Das Kalibrierobjekt kann unter Verwendung einer beweglichen Halterung in eine vorgegebene Position relativ zu dem Target in den Strahlengang eingebracht werden. Die Halterung kann so ausgestaltet sein, dass durch Betätigung der Halterung das Kalibrierobjekt aus dem Strahlengang entfernt wird bzw. wieder in die vorgegebene Position in dem Strahlengang gebracht wird. Z.B. ist das Kalibrierobjekt an einem Teil der Halterung befestigt, der durch Drehen und/oder durch eine Linearbewegung in eine der vorgegebenen Position entsprechende Stellung gebracht werden kann, wobei der Teil vorzugsweise in dieser Stellung einrastet und/oder verriegelt werden kann.

Dadurch ist es möglich, während einer Vermessung eines Messobjekts das Kalibrierobjekt immer wieder in die vorgegebene Position zu bringen und die resultierenden Durchstrahlungsbilder für die Korrektur der Einstellung der Fokussierungseinrichtung zu verwenden. Dabei ist die bewegliche Halterung vorzugsweise mit der Strahlungserzeugungseinrichtung verbunden, so dass allein aufgrund dieser Verbindung die vorgegebene Position reproduzierbar erreicht werden kann. Auch ist es vorteilhaft, dass das Kalibrierobjekt und/oder die Filter im Strahlengang unmittelbar hinter dem Austrittsquerschnitt angeordnet sind, durch den die Strahlung aus der Strahlungserzeugungseinrichtung austritt. Auf diese Weise kann eine sehr große Vergrößerung des Kalibrierobjekts in dem Durchstrahlungsbild erzielt werden bzw. die Filterung bei geringer Filtergröße über den gesamten Austrittsquerschnitt gewährleistet werden.

In der Radiographie ist es üblich, zumindest zeitweise Filter zu verwenden, durch die die Strahlung hindurchtritt, so dass das Spektrum der Strahlung verändert wird. Vorzugsweise weist die Halterung ein oder mehrere Filter zur Filterung der Strahlung auf, so dass durch Betätigung der Halterung wahlweise ein oder mehrere Filter und/oder das Kalibrierobjekt in den Strahlengang der elektromagnetischen Strahlung eingebracht werden können. Das Kalibrierobjekt kann folglich wie ein spezieller Filter betrachtet werden, das jedoch nicht oder nicht ausschließlich das Spektrum der Strahlung beeinflusst, sondern in definierten Raumwinkelbereichen die Intensität der Strahlung schwächt.

Durch die Integration des Kalibrierobjekts in die Halterung wird daher kein oder nur unwesentlich mehr zusätzlicher Raum benötigt.

Wenn das Kalibrierobjekt und ein Messobjekt sich gleichzeitig in dem Strahlengang der elektromagnetischen Strahlung befinden, ist das Kalibrierobjekt vorzugsweise näher als das Messobjekt an dem Target angeordnet. Vorzugsweise ist das Kalibrierobjekt (beispielsweise wie bereits beschrieben) an der Strahlungserzeugungseinrichtung angeordnet oder befestigt, wobei die Strahlungserzeugungseinrichtung das Target aufweist.

Vorteile dieser Anordnung sind, wie bereits erwähnt, die Vergrößerung von Strukturen des Kalibrierobjekts mit hohem Vergrößerungsfaktor, die einfache Handhabung des Kalibrierobjekts und die exakt reproduzierbare Positionierung des Kalibrierobjekts im Strahlengang.

Insbesondere wird ein Kalibrierobjekt bevorzugt, das Strukturen aufweist, die durch Kanten eines Materials oder durch Kanten und/oder Ränder mehrerer Materialien gebildet werden. Unter Kanten werden insbesondere Oberflächen des jeweiligen Materials verstanden, die vorzugsweise so angeordnet werden, dass sie in Richtung ihrer Kantenhöhe sowie in Richtung der optischen Achse der elektromagnetischen Strahlung oder parallel zu der optischen Achse verlaufen. Dabei müssen die Kanten nicht exakt parallel oder in Richtung der optischen Achse verlaufen, insbesondere wenn sie im Außenbereich eines Strahlungskegels der Strahlung angeordnet sind.

Bei einer Ausführungsform des erfindungsgemäßen Verfahrens wird bei der Auswertung des zumindest einen Durchstrahlungsbildes in dem jeweiligen Bild entlang einer Linie, die quer zu einem durch die Kanten erzeugten Kantenprofil verläuft, eine Änderung von Bildwerten (insbesondere von Grauwerten) ausgewertet und wird abhängig von der Änderung die Fokussierungseinrichtung eingestellt. Unter dem Kantenprofil wird eine von der jeweiligen Kante in dem Durchstrahlungsbild erzeugte Bildstruktur verstanden. Wenn in dem Material, das die Kante aufweist, eine Extinktion der Strahlung stattfindet, ist das Kantenprofil ein mehr oder weniger scharf verlaufender Übergang zwischen einem Bildbereich, der einer geringeren Strahlungsintensität entspricht, und einem Bildbereich, der einer größeren Strahlungsintensität entspricht. Es handelt sich daher z.B. bei den für die Radiographie üblichen Grauwertbildern um einen Übergang zwischen Bereichen mit unterschiedlichen Grauwerten. Aufgrund der Auswertung des Durchstrahlungsbildes entlang der erwähnten Linie, die quer zu dem Kantenprofil verläuft, kann die Schärfe oder Abruptheit der Änderung der Bildwerte festgestellt werden und für die Einstellung der Fokussierungseinrichtung verwendet werden. Z.B. werden lediglich die Bildwertdifferenzen benachbarter Pixel ausgewertet, die auf der Linie liegen. Bei dieser Auswertung können hohe Differenzen zwischen benachbarten Pixeln entlang der Linie übergewichtet werden, um die Schärfe des Überganges an dem Kantenprofil feststellen zu können. Beispielsweise wird jeweils das Quadrat der Differenz der Bildwerte zwischen benachbarten Pixeln gebildet und werden alle Quadrate aufsummiert. Ferner wird bevorzugt, dass die Linie, entlang der ausgewertet wird, eine Mehrzahl der Kantenprofile schneidet.

Weiterhin wird bevorzugt, dass die Änderung der Bildwerte entlang zweier verschiedener, quer zueinander verlaufender Linien in dem jeweiligen Bild ausgewertet wird. Insbesondere können die Linien in Richtung der Zeilen bzw. Spalten einer Detektormatrix der Bildaufnahmeeinrichtung verlaufen. Auf diese Weise kann festgestellt werden, dass das Bild in einer Richtung schärfer ist als in der anderen Richtung. Vorzugsweise wird dies bei der Einstellung der Fokussierungseinrichtung berücksichtigt. Hierzu kann die Fokussierungseinrichtung z.B. eine zweite elektromagnetische Wicklung und/oder eine zusätzliche Elektronenlinse aufweisen, die den Elektronenstrahl lediglich bezüglich einer Richtung quer zu der Ausbreitung des Elektronenstrahls fokussiert.

Das Kalibrierobjekt ist vorzugsweise dazu geeignet, die Einstellung der Fokussierungseinrichtung in verschiedenen Leistungsbereichen einzustellen. Unter Leistung wird hier die Leistung verstanden, mit der die Teilchen auf das Target eingestrahlt werden, also z.B. die elektrische Beschleunigungsleistung zur Beschleunigung von Elektronen eines Elektronenstrahls, der auf das Target gerichtet ist.

Bei einer konkreten Ausführungsform eines solchen Kalibrierobjekts weisen die Strukturen des Kalibrierobjekts eine erste Teil-Struktur und eine zweite Teil-Struktur auf, wobei Abstände der Kanten und/oder der Ränder in der ersten Teil-Stnrktur größer sind als in der zweiten Teil-Struktur. Dies schließt nicht aus, dass einzelne Abstände bzw. der Abstand in einem kleinen Teil der ersten Teil-Struktur kleiner sind als in einem kleinen Teilbereich der zweiten Teil-Struktur. Im Durchschnitt oder überwiegend sind die Abstände in der ersten Teil-Struktur jedoch größer.

Die erste Teil-Struktur kann daher bei hohen Leistungen eingesetzt werden und die zweite Teil-Struktur bei kleinen oder geringeren Leistungen.

Besonders bevorzugt wird ein Kalibrierobjekt, in dem Materialbereiche, die die Kanten bilden, wie die Strahlen bzw. Segmente eines Siemenssterns geformt sind und relativ zu anderen Strahlen angeordnet sind, wobei jedoch nicht wie bei dem Siemensstern alle Strahlen bei konstantem Winkelabstand zueinander vorhanden sein müssen. Vielmehr wird bevorzugt, dass aus Sicht des Zentrums sich lediglich jeweils eine Mehrzahl der Strahlen in Teil-Winkelbereichen um das Zentrum radial nach außen erstreckt. Andere Winkelbereiche enthalten dagegen keine Strahlen oder Strahlen mit einer anderen Winkelbreite. Unter der Winkelbreite wird der Winkelabstand der beiden Außenkanten des Strahls verstanden.

Insbesondere können auf diese Weise die erste und zweite Teil-Struktur realisiert werden: In zumindest einem Winkelbereich sind Strahlen mit geringerer Winkelbreite angeordnet (zweite Teil-Struktur) und in zumindest einem Winkelbereich sind Strahlen mit größerer Winkelbreite angeordnet (erste Teil-Struktur). Dabei ist vorzugsweise der Winkelabstand der Strahlen gleicher Winkelbreite gleich der Winkelbreite in dem jeweiligen Winkelbereich.

Allgemeiner formuliert und somit losgelöst von dem zuvor beschriebenen konkreten Ausführungsbeispiel erstrecken sich die Kanten und/oder Ränder der ersten Teil-Struktur und der zweiten Teil-Struktur bezogen auf einen Ausbreitungsraum der elektromagnetischen Strahlung in verschiedenen Raumwinkelbereichen, so dass ein Durchstrahlungsbild der ersten Teil-Struktur und der zweiten Teil-Struktur aufgenommen werden kann. Dabei ist die zweite Teil-Struktur im Strahlengang der elektromagnetischen Strahlung vorzugsweise näher an dem Target angeordnet als die erste Teil-Struktur. Dadurch kann eine der Größe der Abstände entsprechende Vergrößerung in dem Durchstrahlungsbild erzielt werden. Die beiden Teil-Strukturen können sich vorzugsweise auch hinsichtlich ihres Aspektverhältnisses unterscheiden, das als Verhältnis der Höhe zu dem Abstand definiert ist, also hier insbesondere als Verhältnis der Kantenhöhe zu dem Abstand der Kanten und/oder der Ränder definiert ist. Die Höhe wird in einer Richtung bestimmt, die etwa in der Ausbreitungsrichtung der Strahlung verläuft. Bei der Ausführungsform mit Strahlen ähnlich, des Siemenssterns wird das Aspektverhältnis beispielsweise mit dem Abstand gebildet, der in radialer Richtung in der Mitte der Strahlen zwischen den Kanten und/oder Rändern besteht.

Vorzugsweise werden die Strukturen so angeordnet, dass sich die Kanten und/oder Ränder quer zur Ausbreitungsrichtung der elektromagnetischen Strahlung und ungefähr in einer Richtung erstrecken, die von der optischen Achse der Strahlung radial nach außen verläuft. Im Fall der Strahlen eines Siemenssterns durchstößt die optische Achse (definiert durch die gerade Verbindungslinie von Brennfleck zur Mitte der Detektoranordnung und/oder durch die Mittelachse des Strahlungskegels) das Kalibrierobjekt daher vorzugsweise im Zentrum der Strahlen.

Eine bevorzugte Ausführungsform des Kallbrierobjekts weist ein für die elektromagnetische Strahlung transparentes Trägermaterial auf, das insbesondere einen scheibenförmigen Körper mit zwei parallelen Oberflächen aufweiset. Wenn das Trägermaterial im Strahlengang der elektromagnetischen Strahlung angeordnet Ist, durchquert die Strahlung das Trägermaterial vorzugsweise etwa senkrecht zu den Oberflächen der Scheibe. Ein bevorzugtes Trägermaterial ist Glaskohlenstoff, der ein hochtechnologischer Werkstoff aus reinem Kohlenstoff Ist und der glasartige und keramische Eigenschaften mit Eigenschaften des Graphits vereint.

Auf das insbesondere scheibenförmige Trägermaterial sind die Materialbereiche, die die Kanten und/oder Ränder bilden, z.B. durch ein galvanisches Verfahren (d.h. durch Abscheidung in einem entsprechenden Bad) aufgebracht. Alternativ können die Materialbereiche insbesondere unter Nutzung lithographischer Techniken, wie sie aus der Herstellung von mikroelektronischen Bauteilen bekannt sind, hergestellt werden. Dabei können CVD (Chemical Vapour Deposition) oder PVD (Physical Vapour Deposition)-Prozesse ausgeführt werden. Ein bevorzugtes Material zur Bildung der Kanten und Ränder ist das hoch absorbierende Gold.

In der vorangegangenen allgemeinen Beschreibung des erfindungsgemäßen Verfahrens wurde verschiedentlich auch schon auf Merkmale einer Anordnung zur Erzeugung elektromagnetischer Strahlung eingegangen. Die Anordnung weist insbesondere Folgendes auf:
- eine einstellbare Fokussierungseinrichtung, die ausgestaltet ist, Teilchen (insbesondere Elektronen) auf ein Target zu lenken, so dass durch die Teilchen in dem Target die elektromagnetische Strahlung erzeugt wird (bzw. durch die Abbremsung der Teilchen in dem Target),
- eine Bildaufnahmeeinrichtung zum Aufnehmen von Durchstrahlungsbildern von Objekten, die von der elektromagnetischen Strahlung durchstrahlt werden (insbesondere von einem Kalibrierobjekt),
- eine Auswertungseinrichtung, die mit der Bildaufnahmeeinrichtung verbunden ist und die ausgestaltet ist, das Durchstrahlungsbild oder eine Mehrzahl der Durchstrahlungsbilder automatisch auszuwerten, und
- eine Einstelleinrichtung, die mit der Auswertungseinrichtung verbunden ist und die ausgestaltet ist, die Fokussierungseinrichtung abhängig von einem Ergebnis der Auswertung In der Auswertungseinrichtung einzustellen.

Das oben bereits beschriebene Kalibrierobjekt kann Teil der Anordnung sein. Die Anordnung gemäß Patentanspruch 8 weist weitere Merkmale auf.

Ausführungsbeispiele der Erfindung werden nun unter Bezugnahme auf die beigefügte Zeichnung beschrieben. Die einzelnen Figuren der Zeichnung zeigen:
- Fig. 1: eine Röntgenröhre zur Erzeugung von Röntgenstrahlung,
- Fig. 2: schematisch eine Anordnung zur Erzeugung elektromagnetischer Strahlung mit einer einstellbaren Fokussierungseinrichtung,
- Fig. 3: schematisch eine Spule zur Fokussierung eines Teilchenstrahls auf ein Target,
- Fig. 4: eine Teildarstellung der in Fig. 2 dargestellten Anordnung, die die Abbildung eines Kalibrierobjekts auf eine Bilderzeugungseinrichtung darstellt,
- Fig. 5: ein Kalibrierobjekt mit zwei verschiedenen Teil-Strukturen, die unterschiedliche Skalierungen aufweisen,
- Fig. 6: eine konkrete Ausführungsform der in Fig. 5 schematisch dargestellten Teil-Struktur mit größeren Abmessungen,
- Fig. 7: eine Darstellung einer konkreten Ausführungsform der schematisch in Fig. 5 dargestellten Teil-Struktur mit kleineren Abmessungen,
- Fig. 8: eine Ansicht, die zeigt, wie sich die Teil-Strukturen gemäß Fig. 6 und Fig. 7 über einen Raumwinkelbereich verteilen, in dem sich die elektromagnetische Strahlung ausbreitet,
- Fig. 9: die Bildauflösung bzw. den Kontrast eines Durchstrahlungsbildes in Abhängigkeit von dem Spulenstrom einer Fokussierungseinrichtung und
- Fig. 10: eine Anordnung zur Beschleunigung und Fokussierung von Elektronen, die z. B. in die Röntgenröhre gemäß Fig. 1 integriert ist.

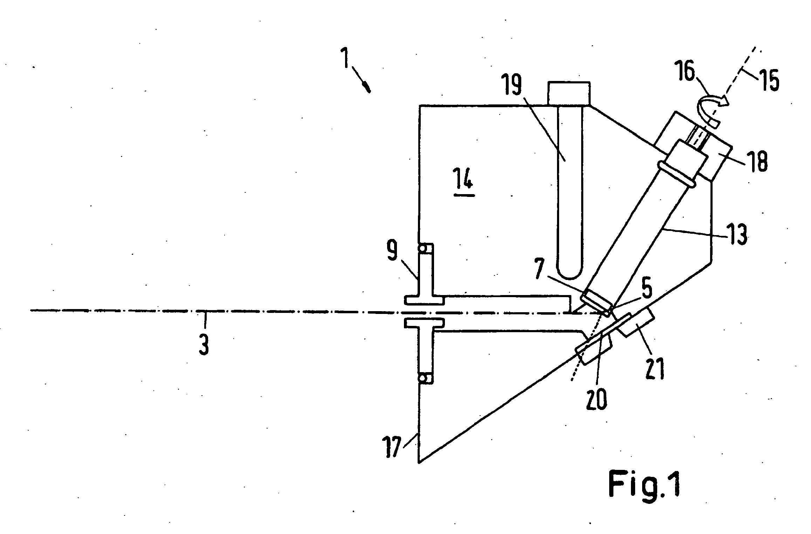

Fig. 1 zeigt einen schematischen Längsschnitt durch eine Strahlungserzeugungseinrichtung 1, die eine Röntgenröhre ist. Durch eine strichpunktierte Linie 3 ist die Einfallsrichtung dargestellt, in der Elektronen durch eine Elektronenblende 9 in die Strahlungserzeugungseinrichtung 1 eintreten und auf ein Target 5 aus Wolframfolie auftreffen. Außerdem ist innerhalb des evakuierten Innenraums 14 der Strahlungserzeugungseinrichtung 1 zusätzlich zu der Elektronenblende 9 eine in dieser Figur nicht dargestellte Fokussierungseinrichtung zur Fokussierung der Elektronen auf einen Brennfleck des Targets 5 vorgesehen. Einstellbare Fokussierungseinrichtungen sind aus dem Stand der Technik bekannt, z. B. aus US 2001/0050972 A1, und werden daher hier nicht näher beschrieben. Die Erfindung ist mit einer solchen Fokussierungseinrichtung ausführbar.

Das Target 5 wird von einer Basis 7 z. B. aus Diamant getragen. An der aus Sicht des Targets 5 gegenüberliegenden Seite der Basis 7 wird die Basis 7 von einem massiven Stab 13 aus Kupfer getragen. Der Stab 13 und somit auch die Basis 7 und das Target 5 können um eine zentrale Längsachse 15 des Stabes 13 manuell gedreht werden, wie auch durch einen Pfeil 16 angedeutet ist, an dem aus Sicht des Targets 5 gegenüberliegenden Ende des Stabes 13 ist eine Rändel-Mechanik 18 vorgesehen, die das Verdrehen des Stabes 13 um die Längsachse 15 ermöglicht.

Außerdem ist eine Kühleinrichtung 19 zum indirekten Kühlen des Targets 5 und der Basis 7 vorgesehen. Unter indirekter Kühlung wird verstanden, dass weder das Target noch die Basis mit der Kühleinrichtung bzw. einem Kühlmittel der Kühleinrichtung direkt in Kontakt sind. Beim Betrieb der Anordnung 1 nimmt die Kühleinrichtung 19 durch Wärmestrahlung und über nicht näher dargestellte Materialbrücken zwischen dem Stab 13 und der Kühleinrichtung 19 Wärme auf und transportiert diese ab.

Die von dem Target 5 erzeugte Röntgenstrahlung wird bis auf die Strahlung, die durch ein für Röntgenstrahlung durchlässiges Fenster 20 (beispielsweise aus Beryllium oder Diamant) hindurchtritt, absorbiert. Die Absorption wird durch den Röhrenkopf selbst oder durch eine ihn umgebende Abschirmung bewirkt. In Richtung Messobjekt und Bildaufnahmevorrichtung wird die allseitig von der Strahlungsquelle abgestrahlte Strahlung durch einen vor oder nach dem Fenster 20 in dem Strahlengang angeordneten Kollimator 21 auf einen Nutzstrahlkegel kollimiert.

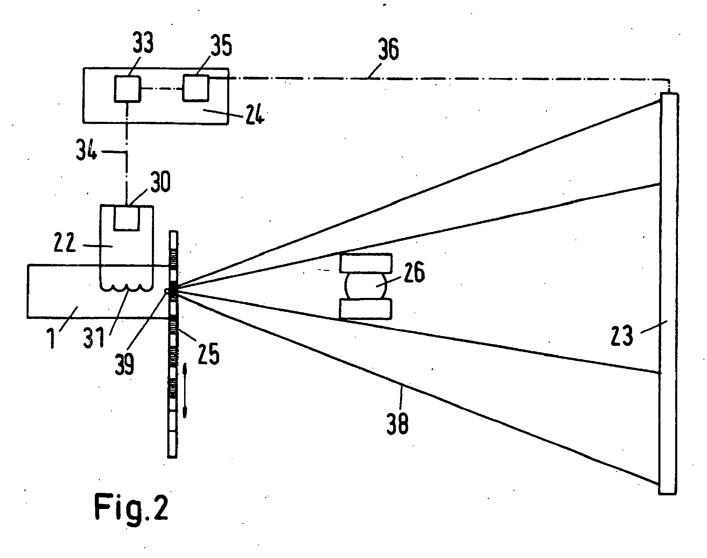

Fig. 2 zeigt eine Strahlungserzeugungseinrichtung 1, z.B. die Röntgenröhre gemäß Fig. 1. Die Strahlungserzeugungseinrichtung 1 weist eine einstellbare Fokussierungseinrichtung 22 auf, die z.B. zumindest eine Magnetspule 31 aufweist. Der Spulenstrom wird durch eine Stelleinrichtung 30 eingestellt, und zwar abhängig von einem Stellsignal, welches die Stelleinrichtung 30 von einer Steuereinheit 33 empfängt, die über eine Steuersignalleitung 34 miteinander verbunden sind.

Die Steuereinheit 33 ist z.B. Teil eines Computers 24, der außerdem noch eine Auswertungseinrichtung 35 aufweist. Die Steuereinheit 33 ist mit der Auswertungseinrichtung 35 verbunden und berücksichtigt bei der Erzeugung der an die Stelleinrichtung 30 auszugebenden Steuersignale Ergebnisse der in der Auswertungseinrichtung 35 durchgeführten Auswertung von Bildern.

Informationen über die Bilder empfängt die Auswertungseinrichtung über eine Verbindung 36 von einer Bilderzeugungseinrichtung 23, die für Röntgenstrahlung empfindliche Detektoren aufweist und ausgestaltet ist, ein zweidimensionales Bild entsprechend einem auf die Bilderzeugungseinrichtung 23 einfallenden Röntgenstrahlungsmusters zu erzeugen. Dabei können die einzelnen Detektoren der Bilderzeugungseinrichtung 23 so ausgestaltet sein, dass sie die auftreffende Röntgenstrahlung über die Zeit integrieren oder den zeitlichen Verlauf erfassen. Die Integration oder der zeitliche Verlauf können auch von einer nicht dargestellten Aufnahmevorrichtung der Bilderzeugungsvorrichtung 23 zur Aufnahme der von den Detektoren gelieferten Bildsignale bereitgestellt bzw. vorgenommen werden. Die Bilderzeugungseinrichtung 23 kann, wie an sich aus dem Stand der Technik für CT-Untersuchungen bekannt, ausgestaltet sein und insbesondere eine Bilderzeugungseinrichtung für die Untersuchung von handwerklich und/oder industriell hergestellten Objekten sein.

In Fig. 2 ist außerdem ein divergierendes Strahlungsbündel bzw. die Seitenansicht eines Strahlungskegels 38 dargestellt, der von dem Brennfleck 39 der Strahlungserzeugungseinrichtung 1 ausgeht. Im Strahlengang der Röntgenstrahlung befindet sich ein Messobjekt 26, das untersucht werden soll und von dem z.B. nach Rekonstruktion aus einer Mehrzahl von Bildern (Radiographieaufnahmen, die mit der in Fig. 2 dargestellten Anordnung bei unterschiedlichen Drehstellungen des Objekts 26 aufgenommen wurden) ein dreidimensionaler Bilddatensatz erzeugt wird, dessen Voxel (Volumenelemente) jeweils einen Grauwert entsprechend der Extinktion in dem jeweiligen zugeordneten Volumenelement des Objekts 26 aufweisen.

An der Strahlungserzeugungseinrichtung 1 ist unmittelbar hinter der Austrittsöffnung bzw. unmittelbar hinter dem Austrittsquerschnitt, durch den die elektromagnetische Strahlung aus der Einrichtung 1 austritt, eine bewegliche Halterung 25 angeordnet, die insbesondere an einer Außenwand und/oder an einem Körper der Strahtungserzeugungseinrichtung 1 befestigt ist. Wie der in Fig. 2 gezeigte Doppelpfeil andeutet, kann die Halterung 25 in einer Richtung quer zum Strahlengang bewegt werden, so dass wahlweise bestimmte Strukturen und/oder Gegenstände im Strahlengang positioniert werden können. Die Gegenstände bzw. Strukturen sind z.B., wie durch die Folge von dunklen und hellen Bereichen der Halterung 25 angedeutet ist, nebeneinander angeordnet und können so durch Verschieben der Halterung 25 relativ zum Austrittsquerschnitt wahlweise einzeln in den Strahlengang eingebracht werden.

Alternativ oder zusätzlich kann eine Mehrzahl der Strukturen und/oder Gegenstände so von der Halterung gehalten werden, dass sie gleichzeitig in den Strahlengang eingebracht werden können, insbesondere in Ausbreitungsrichtung der Strahlung hintereinander und/oder nebeneinander. Die Halterung kann auch drehbar sein, so dass durch Drehung eines oder mehrerer der Strukturen und/oder Gegenstände in den Strahlengang eingebracht werden können.

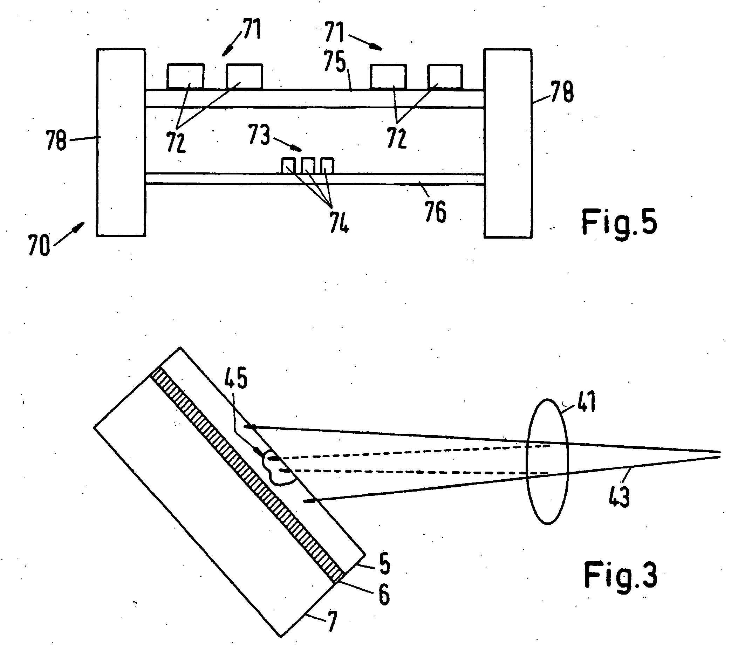

Bei den Gegenständen handelt es sich insbesondere um Filter zur Filterung der hindurchtretenden Strahlung. Bei den Strukturen handelt es sich insbesondere um ein oder mehrere Kalibrierobjekte. Auf eine besonders bevorzugte Ausführungsform eines Kalibrierobjekts mit mehreren Strukturen wird noch unter Bezugnahme auf Fig. 5 bis Fig. 8 näher eingegangen.

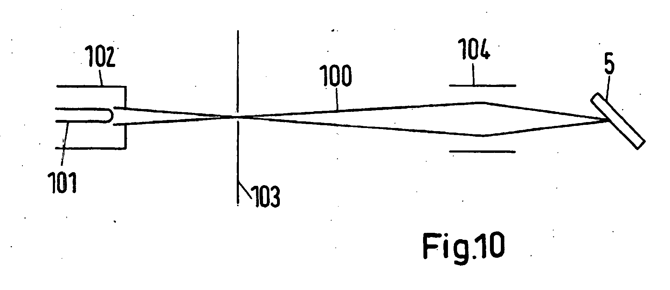

Fig. 10 zeigt ein konkretes Ausführungsbeispiel für eine Anordnung zur Erzeugung der Teilchen (hier Elektronen) und zur Fokussierung des Teilchenstrahls auf ein Target. Ein Heizfaden 101, der von elektrischem Strom durchflossen wird, emittiert die Elektronen. Der Heizfaden kann z. B. eine einzige Biegung aufweisen, an der die Elektronen emittiert werden (so genannter Haarnadel-Heizfaden, englisch: hairpin-filament). Durch Anlegen einer elektrischen Spannung zwischen dem Heizfaden 101 (Kathode) und einer in der Ausbreitungsrichtung des Elektronenstrahls nachfolgenden Lochblende 103 (Anode) werden die Elektronen beschleunigt. Der entsprechende nutzbare Teil des Elektronenstrahls ist mit dem Bezugszeichen 100 bezeichnet. Zwischen dem Heizfaden 101 und der Lochblende 103 befindet sich eine zweite Lochblende 102, die beispielsweise ein Wehneltzylinder ist. Die Lochblende 103 wirkt als elektrostatische Linse und fokussiert den Elektronenstrahl vor. Der nutzbare Teil 100 des Elektronenstrahls hat folglich in der Ebene der Lochblende (Anodenebene) eine Einschnürung (Crossover). Im weiteren Verlauf seiner Ausbreitung passiert der nutzbare Teil 100 des Elektronenstrahls eine Fokussierungseinrichtung 104, die beispielsweise eine Magnetspule ist. Alternativ kann die Fokussierungseinrichtung 104 auch anders gestaltet sein und z. B. eine Kondensator-Anordnung sein. Außerdem kann an Stelle einer einzigen Fokussierungseinrichtung 104 im E-Feld freien Bereich des Strahlungsweges der Elektronen, d. h. im hinter der Anode liegenden Bereich, eine Mehrzahl von in Strahlungsrichtung (d.h. auf dem Weg) hintereinander liegenden Fokussierungseinrichtungen vorgesehen sein. Im Ergebnis wird der Elektronenstrahl in jedem Fall auf den Brennfleck in dem Target 5 fokussiert, wenn die Fokussierungseinrichtung oder die Fokussierungseinrichtungen richtig eingestellt werden.

Fig. 3 zeigt einen Elektronenstrahl, der aus einer Quelle von rechts in der Figur kommend durch ein einstellbares Magnetfeld 41 hindurchtritt, welches z.B. von der in Fig. 2 dargestellten Fokussierungseinrichtung 22 erzeugt wird. Hierdurch kann der Elektronenstrahl 43 auf ein Target 5 fokussiert werden, welches über eine Schicht 6 eines Verbindungsmaterials (z.B. eines Hartlots) mit einer Basis 7 verbunden ist.

Fig. 3 zeigt die Auswirkung von zwei verschiedenen Zuständen des Magnetfelds 41. In einem ersten Zustand breitet sich der Elektronenstrahl 43 divergierend, wie durch die zwei durchgezogenen Pfeillinien dargestellt, durch das Magnetfeld 41 hindurch aus, bis er auf das Target 5 trifft. Damit verbunden ist eine große Abmessung des Brennflecks auf dem Target 5, in dem die Elektronen auf das Material des Targets 5 auftreffen. In einem zweiten Zustand des Magnetfelds 41 werden die divergierenden Randstrahlen des Elektronenstrahls 43, wie durch die gestrichelten Pfeillinien in Fig. 3 dargestellt, abgelenkt und auf einen wesentlich kleineren Brennfleck 45 in dem Target 5 fokussiert. Durch Feineinstellung des Spulenstroms kann das Magnetfeld 41 so variiert werden, dass die Größe des Brennflecks 45 (gemessen bzw. betrachtet entlang der Oberfläche des Targets 5) einen bestimmten vorgegebenen Wert erreicht bzw. einen Wert erreicht, der in einem Durchstrahlungsbild einen gewünschten Effekt ergibt. Z.B. wird durch Einstellung des Magnetfelds 41 bzw. Variation des Spulenstroms die Größe des Brennflecks 45 so eingestellt, dass Bilder von Strukturen eines Kalibrierobjekts mit einer vorgegebenen Mindestauflösung und/oder mit einer Maximalauflösung in dem Durchstrahlungsbild aufgefunden werden können.

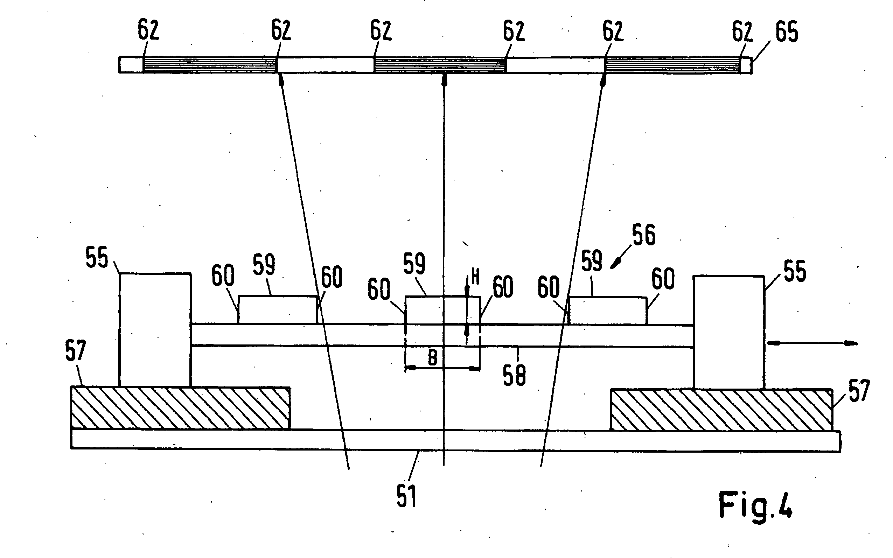

Fig. 4 zeigt ein Austrittsfenster 51 der Strahlungserzeugungseinrichtung, durch das sich die elektromagnetische Strahlung, wie durch drei Pfeile angedeutet, hindurch nach außerhalb der Strahlungseinrichtung ausbreitet. Eine Halterung 55 für ein Kalibrierobjekt 56 ist quer zur Strahlungsrichtung verschieblich unmittelbar vor dem Austrittsfenster 51 angeordnet. Insbesondere ist eine Führung 57 zur Führung der Verschiebebewegung der Halterung 55 direkt oder indirekt fest mit dem Fenster 51 verbunden. Auf diese Weise kann die Halterung 55 reproduzierbar in eine bestimmte Relativposition zu dem Fenster 51 und dem nicht in Fig. 4 dargestellten Target gebracht werden. Beispielsweise kann die Halterung 55 so ausgestaltet sein, dass sie in der bestimmten Relativposition einrastet. Die Führung 57 kann außerdem so ausgestaltet sein, dass sie nicht nur die Bewegung der Halterung 55 führt, sondern diese auch hält. Daher kann sich die Halterung 55 nicht unbeabsichtigt von der Führung 57 lösen.

Wie bereits erwähnt, hält die Halterung 55 ein Kalibrierobjekt 56. Dieses Kalibrierobjekt 56 weist einen scheibenförmigen Träger 58 aus einem Material auf (vorzugsweise Glaskohlenstoff), in dem die elektromagnetische Strahlung nur sehr geringfügig absorbiert und/oder gestreut wird.

An einer Oberfläche der Trägerschicht 58 sind Bereiche 59 aus einem anderen Material als die Trägerschicht 58 ausgebildet. Dieses Material weist einen deutlich höheren Schwächungskoeffizienten (Streuung und Absorption) für die elektromagnetische Strahlung auf. Gut geeignet für Röntgenstrahlung ist beispielsweise Gold.

Die Materialbereiche 59 weisen etwa in Ausbreitungsrichtung der elektromagnetischen Strahlung verlaufende Kanten 60 auf. Dementsprechend werden auf der Bilderzeugungseinrichtung 65, die wie die Bilderzeugungseinrichtung 23 gemäß Fig. 2 ausgestaltet sein kann, den Materialbereichen 59 entsprechende Strahlungsmuster erzeugt.

Um möglichst scharfe Kanten bzw. Ränder der auf die Bilderzeugungseinrichtung 65 projizierten Materialbereiche 59 erzielen zu können, weisen die Materialbereiche 59 ein möglichst hohes Aspektverhältnis (Höhe H dividiert durch Abstand bzw. Breite B) auf. Anstelle der Breite B kann auch der Abstand zwischen den Materialbereichen 59 für die Definition des Aspektverhältnisses herangezogen werden. In dem in Fig. 4 dargestellten schematischen Fall beträgt das Aspektverhältnis etwa 1 : 3. Insbesondere für hohe Leistungen der Strahlungserzeugungseinrichtung wird jedoch ein Aspektverhältnis von mindestens 0,6, vorzugsweise mehr als 0,8, vorgeschlagen. Unter einer hohen Leistung wird ein Wert der Elektronenstrahlleistung einer Mikrofokus-Röntgenröhre im Bereich von 100 W bis einigen 100 W (z. B. 320 W) verstanden.

Fig. 5 zeigt ein Kalibrierobjekt mit zwei, verschieden skalierten Strukturen 71, 73. Wiederum ist eine Halterung 78 vorgesehen, die beispielsweise anstelle der Halterung 55 gemäß Fig. 4 oder als Teil der Halterung 25 gemäß Fig. 2 vorgesehen sein kann. Insbesondere kann eine Relativbewegung der Halterung 78 relativ zu einer Strahlungserzeugungseinrichtung möglich sein, so dass die Strukturen 71, 73 bei Bedarf in den Strahlengang der elektromagnetischen Strahlung eingebracht werden können.

In der Darstellung gemäß Fig. 5 würde die Strahlung von unten nach oben durch die Strukturen 71, 73 hindurchtreten bzw. diese passieren, wenn die Halterung 78 entsprechend positioniert worden ist. Generell, losgelöst von diesem Ausführungsbeispiel wird bevorzugt, dass dabei die Kanten der Materialbereiche parallel zu der optischen Achse ausgerichtet werden (z. B. mittels monolithischer Elemente in Form von Blattfederparallelogrammen). Zunächst tritt die Strahlung daher durch eine Trägerschicht 76 der Struktur 73 hindurch. In den Materialbereichen 74, die die Struktur 73 bilden, findet dann eine erhebliche Schwächung der hindurch tretenden elektromagnetischen Strahlung statt. Die geschwächte Strahlung und die Strahlung, die die Struktur 73 in dichtem Abstand zu den Materialbereichen 74 ohne Schwächung passiert hat, tritt im weiteren Strahlengang ohne Schwächung in der Struktur 71 durch diese hindurch.

Andererseits trifft Strahlung, die im Wesentlichen ohne Schwächung durch die Trägerschicht 76 hindurch getreten ist und die die Materialbereiche 74 in größerer Entfernung passiert hat, in Teilbereichen zunächst durch eine Trägerschicht 75 der Struktur 71 hindurch und wird dann durch Schwächung in Materialbereichen 72 der Struktur 71 geschwächt. Ein anderer Teil der Strahlung, der ebenfalls nicht durch die Materialbereiche 74 der Struktur 73 geschwächt wurde, passiert auch die Materialbereiche 72 ohne wesentliche Schwächung. Auf diese Weise existieren Raumwinkelbereiche für die Ausbreitung der elektromagnetischen Strahlung in Richtung der Bilderzeugungsvorrichtung, in denen ein Abbild der Struktur 73 erzeugt wird, und andere Raumwinkelbereiche, in denen ein Abbild der Struktur 71 erzeugt wird. Daher können in demselben Kalibrierobjekt Strukturen unterschiedlicher Art vorgesehen werden, insbesondere um eine Kalibrierung (durch Einstellung der Fokussierungseinrichtung) in verschiedenen Leistungsbereichen des Elektronenstrahls oder eines anderen Teilchenstrahls vorzunehmen. Wie aus Fig. 5 erkennbar ist, ist die Höhe der Materialbereiche 72 der Struktur mit den breiteren Materialbereichen höher als bei der Struktur mit dem schmaleren Materialbereichen 74. Bei der Darstellung handelt es sich um eine schematische Darstellung. In der Praxis wird bevorzugt, dass das Aspektverhältnis der Struktur bzw. Strukturen mit größerer Breite der Materialbereiche und/oder mit größeren Abständen der Materialbereiche größer ist als bei der Struktur mit kleineren Abmessungen quer zum Strahlengang.

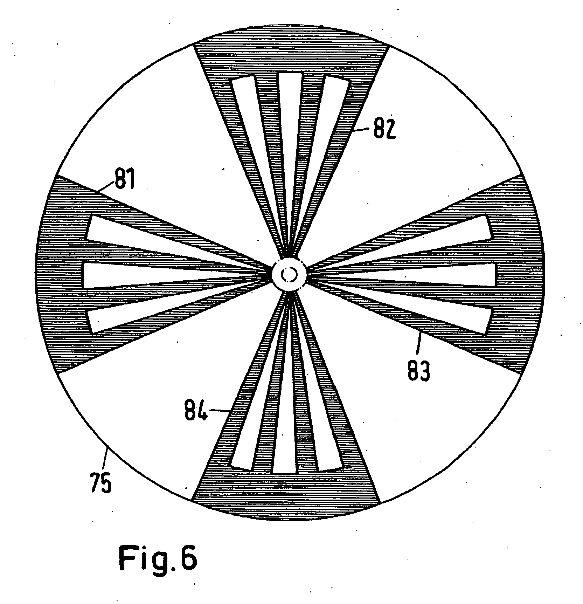

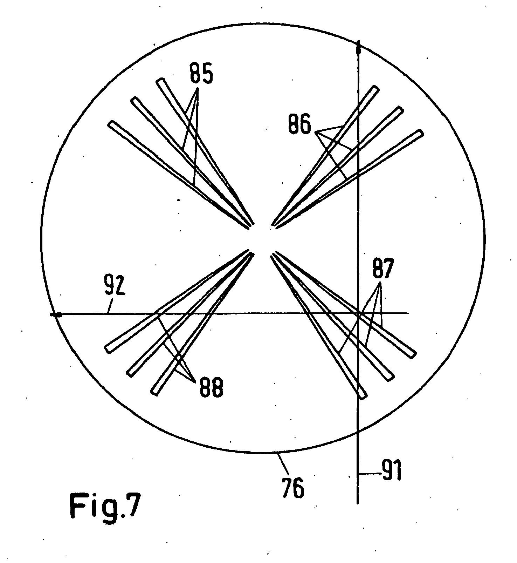

Fig. 6 und Fig. 7 zeigen das Durchstrahlungsbild bzw. die Ansicht von zwei verschiedenen Strukturen, die z.B. gemeinsam in einem Kalibrierobjekt der Art gemäß Fig. 5 im Strahlengang angeordnet werden können bzw. deren Durchstrahlungsbilder gleichzeitig von einer Bilderzeugungseinrichtung aufgenommen werden können. Beide Strukturen sind beispielsweise auf den durch die Kreislinie in Fig. 6 und Fig. 7 angedeuteten scheibenförmigen Trägern 75 bzw. 76 angeordnet, bei denen es sich um die Träger gemäß Fig. 5 handeln kann. Die Materialbereiche der Struktur mit den größeren Abmessungen sind jedoch anders gestaltet (geformt und angeordnet) als die Materialbereiche 72 gemäß Fig. 5.

Fig. 6 zeigt durch dunkle Flächen dargestellt die Bereiche auf dem Träger 75, die Materialbereiche des für die Strahlung absorbierenden Materials sind. Es sind daher insgesamt vier Kreissegmente vorhanden, innerhalb denen sich überhaupt Materialbereiche 81 bis 84 befinden, die zu einer wesentlichen Schwächung der elektromagnetischen Strahlung führen können. Innerhalb dieser Kreissegmente sind jedoch jeweils drei strahlenförmige Bereiche ausgespart, wobei sich diese Bereiche wie auch die Kreissegmente in radialer Richtung bezogen auf den Mittelpunkt des Trägers 75 von innen nach außen erstrecken. Dabei werden auch die ausgesparten Bereiche wie auch die Kreissegmente von innen nach außen breiter. Die ausgesparten Bereiche können jedoch schon in einem Abstand zu dem Außenradius der Kreissegmente enden.

Dagegen sind in der Struktur gemäß Fig. 7 auf dem Träger 76 lediglich eine Mehrzahl von Materialbereichen 85 bis 88 aus absorbierendem Material aufgebracht, wobei diese Materialbereiche eine Form und relative Anordnung zueinander wie die ausgesparten Bereiche der Struktur gemäß Fig. 6 aufweisen. Allerdings sind die Abmessungen der Materialbereiche 85 bis 88 kleiner als die Außenabmessungen der ausgesparten Bereiche gemäß Fig. 6. Insbesondere ist die durch den Winkelabstand (bezogen auf die Winkelskala um den Mittelpunkt des kreisförmigen Trägers 76) der Außenränder der Materialbereiche 85 bis 88 wesentlich kleiner als der Winkelabstand der Außenränder der ausgesparten Bereiche gemäß Fig. 6. Vorzugsweise ist (anders als in Fig. 7 dargestellt) auch der Winkelabstand zwischen den einzelnen Materialbereichen 85, 86, 87, 88 kleiner als der Winkelabstand zwischen den ausgesparten Bereichen gemäß Fig. 6. Daher kann die Struktur sowohl bezüglich der Breite der Materialbereiche als auch bezüglich der Abstände der Materialbereiche kleinere Abmessungen aufweisen als die Struktur gemäß Fig. 6.

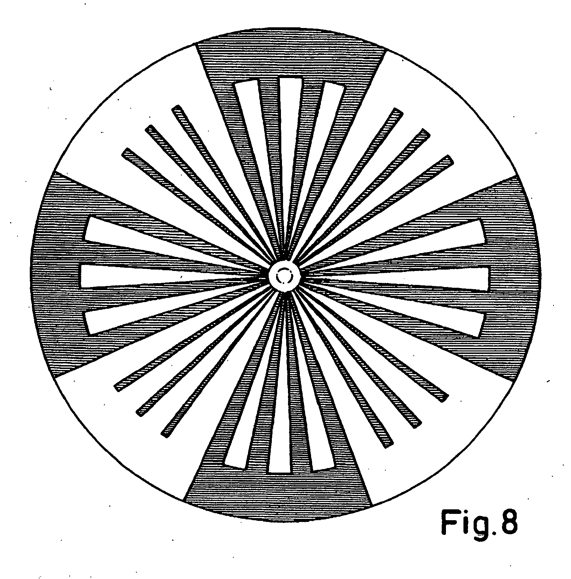

Die Strukturen gemäß Fig. 7 und Fig. 8 weisen beide mit Material belegte Flächen auf. Daraus kann das absolute Kontrastverhältnis bestimmt werden, welches idealer Weise 1 ist, aber im Ausführungsbeispiel auf Grund der endlichen Dicke des Materials und auf Grund der Schwächung im Trägermaterial geringer als 1 ist. Die örtliche Auflösung kann als MTF (englisch: Modulation Transfer Function) angegeben werden. Insbesondere kann zu jeder Strukturbreite (angegeben als Linienpaar pro mm) ein Übertragungsverhältnis angegeben werden. Als Kennwert der Auflösung wird (in der Detektortechnik) allgemein eine Strukturbreite (LP/mm) bei einer MTF von ca. 30% angegeben. Die gesamte MTF kann als Qualitätsmerkmal der Anordnung für einen oder mehrere gegebene Betriebzustände dokumentiert werden. Parameter des Betriebszustandes sind insbesondere die Leistung des Teilchenstrahls, die Vergrößerung und der oder die Einstellwerte der Fokussierungseinrichtung.

Fig. 8 zeigt das Durchstrahlungsbild bzw. die Ansicht der beiden Strukturen gemäß Fig. 6 und Fig. 7, wenn sie in der Art des Kalibrierobjekts gemäß Fig. 5 im Strahlengang hintereinander angeordnet sind. Es ist erkennbar, dass in jeweils vier Raumwinkelbereichen mit kreissegmentförmigem Querschnitt die Strukturen mit den kleineren Abmessungen und die Strukturen mit den größeren Abmessungen abgebildet werden.

Wird beispielsweise die Struktur gemäß Fig. 7 ausgewertet, um die Bildauflösung bzw. den Kontrast zu ermitteln, der in einem Durchstrahlungsbild vorhanden ist, kann, wie in Fig. 7 angedeutet, entlang der beiden senkrecht zueinander stehenden Pfeillinien 91, 92 ausgewertet werden. Dabei können die Richtungen der Pfeillinien 91, 92 mit den Richtungen der Reihen bzw. Spalten der einzelnen Detektoren der Bilderzeugungseinrichtung übereinstimmen. Daher braucht beispielsweise lediglich eine Zeile und eine Spalte der Detektoren ausgewertet zu werden. Außerdem werden die Kanten der Strukturen vorzugsweise so ausgerichtet, dass die Auswertungsrichtungen die Kanten senkrecht zu deren Verlauf schneiden. Die Auswertungslinien können daher auch wesentlich kürzer sein als in Fig. 7 dargestellt. Bei der Auswertung wird insbesondere wie folgt vorgegangen:

Die durch die Reihe bzw. Spalte gebildete Folge von Detektoren liefert jeweils einen Bildwert, beispielsweise einen Grauwert, der der Intensität der auftreffenden Strahlung entspricht. Nun wird für jedes Paar von in der Folge aufeinander folgenden Detektoren die Differenz der Bildwerte ermittelt. Um höhere Differenzen, die höheren Kontrasten und damit höher erzielten Auflösungen entsprechen, höher zu gewichten, werden die Differenzen quadriert. Dadurch wird auch das für die Auswertung der Differenzen unnötige Vorzeichen eliminiert. Die Summe der Quadrate der Differenzen wird gebildet und als Ergebnis der Auswertung für die Einstellung der Fokussierungseinrichtung verwendet.

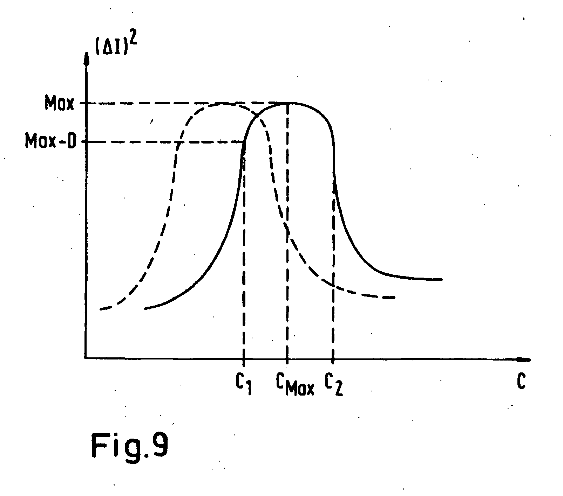

Fig. 9 zeigt schematisch die Abhängigkeit dieser Ergebnisgröße, die durch (Δl)² symbolisiert ist, von dem Spulenstrom C der Fokussierungseinrichtung. Man erkennt beginnend von kleinen Werten des Spulenstroms C, dass der Kontrast deutlich ansteigt und bereits bei dem Wert C₁ sehr hoch ist. Mit weiter ansteigendem Spulenstrom C wird bei C_{Max} das Maximum des Kontrasts erreicht. Mit weiter ansteigendem Spulenstrom C fällt der Kontrast wieder stark ab. Typischerweise liegt der Kontrast während eines andauernden Betriebes in dem Bereich zwischen "Max-D" und "Max". Dabei kann sich die Abhängigkeit des Kontrasts von dem Spulenstrom C wie durch eine gestrichelte Linie dargestellte Kurve in Fig. 9 angedeutet verschieben. Gründe hierfür können Änderungen der Temperatur sowohl der Umgebung als auch von Teilen der Strahlungserzeugungseinrichtung sein. Aber auch andere Einflussfaktoren, wie beispielsweise der elektrische Strom des Elektronenstrahls einer Röntgenröhre oder die Beschleunigungsspannung des Elektronenstrahls, führen zu einer anderen Abhängigkeit zwischen dem Kontrast und dem Spulenstrom C. Daher wird vorzugsweise wiederholt das Kalibrierobjekt in den Strahlengang eingebracht und durch Veränderung des Spulenstroms wieder das Maximum des Kontrasts eingestellt. Dabei kann das Maximum auf einem anderen Wert des Kontrasts liegen als zuvor. Es wird daher bevorzugt, verschiedene Werte des Spulenstroms einzustellen und unter Verwendung der aus den verschiedenen Spulenströmen resultierenden Kontraste das Maximum des Kontrasts zu ermitteln oder aufzufinden. Dabei kann beispielsweise die Ableitung des Kontrasts nach dem Spulenstrom gebildet werden.

Alternativ oder zusätzlich zu dem Spulenstrom kann der Strom durch eine Emissionseinrichtung zum Emittieren der Teilchen eingestellt werden, die in dem Brennfleck auf das Target treffen und dort die elektromagnetische Strahlung erzeugen. Dies gilt für alle Ausführungsformen der Erfindung, wenn nicht ausdrücklich erwähnt wird, dass keine Einstellung der Emissionseinrichtung als Teil der Einstellung der Fokussierungseinrichtung vorgenommen wird.

In der Praxis existieren auch Fokussierungseinrichtungen mit mehreren Teil-Fokussierungseinrichtungen, die in einem mehrstufigen Prozess eingestellt werden. Dabei wird z.B. in einem ersten Schritt zunächst die Leistung des Elektronenstrahls und/oder der Strom durch die Emissionseinrichtung (z. B. Heizfaden) eingestellt und eine entsprechende Voreinstellung der Fokussierungseinrichtung bzw. anderer Teile der Fokussierungseinrichtung vorgenommen. Anschließend wird z. B. in einem zweiten Schritt in der erfindungsgemäßen Weise eine erste aus von zwei in Elektronenstrahlungs-Richtung aufeinander folgenden Fokussierungseinrichtungen eingestellt. Wiederum anschließend wird z. B. in einem dritten Schritt in der erfindungsgemäßen Weise die zweite der zwei in Elektronenstrahl-Richtung aufeinander folgenden Fokussierungseinrichtungen eingestellt. Insbesondere der zweite und der dritte Schritt können auch wiederholt ausgeführt werden, sodass die Fokussierung in einem iterativen Verfahren erfolgt.

Bei besonders kleinen Abmessungen des Brennflecks und bei hohen Elektronenstrahlleistungen kann es zu einer Überhitzung des Targetmaterials kommen. Es ist daher möglich, dass ein Mindestwert der Brennfleck-Abmessung eingestellt werden muss, der nicht dem maximal erreichbaren Kontrast entspricht. Daher kann z.B. auch eine obere Grenze für den Kontrast vorgegeben werden, die nicht überschritten werden darf. In diesem Fall wird nicht auf den maximalen Kontrast eingestellt, sondern auf den oberen Grenzwert. Es ist auch möglich, in der erfindungsgemäßen Weise durch Auswertung eines oder mehrerer Durchstrahlungsbilder die örtliche Auflösung in dem Durchstrahlungsbild oder Voxelgröße in einem CT-Volumendatensatz einzustellen. Vorzugsweise erfolgt dies vor der ersten Aufnahme, die für die Untersuchung eines Messobjekts aufgenommen wird.

Insbesondere für die Rekonstruktion bei einer Computertomographie (CT) ist dies ein entscheidender Vorteil, da es vermieden werden kann, die Rekonstruktion mit kleineren Voxelgrößen durchzuführen (zu rechnen) als bei einem eingestellten Kontrast in den Durchstrahlungsbildem sinnvoll ist.

Das Kalibrierobjekt gemäß Fig. 7 bis Fig. 9 hat den Vorteil, dass sowohl die Struktur mit den kleineren Abmessungen als auch die Struktur mit den größeren Abmessungen quer zur Richtung der elektromagnetischen Strahlung bei geringeren oder größeren Radien bezüglich dem Zentrum der Strukturen ausgewertet werden können. Dadurch können für verschiedene Betriebssituationen der Anordnung jeweils die geeigneten Bereiche der Struktur ausgewertet werden, ohne das Kalibrierobjekt auswechseln zu müssen. Beispielsweise wird bei sehr kleinen Elektronenstrahlleistungen von weniger als 10 W die Struktur gemäß Fig. 7 nahe dem Zentrum ausgewertet. Hier sind die kleinsten Abstände und kleinsten Breiten der Materialbereiche anzutreffen.

Dagegen wird bei sehr hohen Elektronenstrahlleistungen und insbesondere auch bei hohen Beschleunigungsspannungen des Elektronenstrahls der Röntgenröhre im radial außen liegenden Bereich der Struktur gemäß Fig. 6 ausgewertet. Hier sind die größten Breiten und größten Abstände der ausgesparten Bereiche anzutreffen. Um dabei noch für eine Auswertung ausreichende Schwächung der elektromagnetischen Strahlung in den Materialbereichen zu erzielen, sollen diese eine große Höhe aufweisen, insbesondere eine Höhe von mehr als 0,2 mm, vorzugsweise mehr als 0,5 mm, für eine Beschleunigungsspannung von mehr als 200 kV.

Statt des Kontrasts kann auch die Ortsauflösung als Ergebnis der Auswertung des oder der Durchstrahlungsbilder für die Einstellung der Fokussierungseinrichtung verwendet werden. Hierbei wird z.B. ermittelt, wie viele Linienpaare aus benachbarten Kanten der Materialbereiche pro Millimeter Auswertungsstrecke (die quer zu dem Verlauf der Kanten verläuft) bestimmt werden können. Dabei kann ein Kriterium vorgegeben sein, welcher Unterschied zwischen benachbarten Pixelwerten oder welcher Wert des Gradienten der Bildwerte in Richtung der Auswertungsstrecke noch als Indiz für das Vorliegen einer Kante bzw. Linie angesehen werden kann.

Durch Anordnung einer Mehrzahl von Filtern, die von der Halterung gehaltert werden und wahlweise oder zur gleichen Zeit in den Strahlengang eingebracht werden, kann die Schwächung in dem Filtermaterial variiert werden. Alternativ oder zusätzlich kann wahlweise lediglich eines von mehreren Filtermaterialien oder können verschiedene Filtermaterialien gleichzeitig in den Strahlengang eingebracht werden. Auf diese Weise ist eine große Variation in den Filterergebnissen möglich.

Die gesamte Halterung kann auch mehrere bewegliche Teile aufweisen, die jeweils ein oder mehrere Filter und/oder ein Kalibrierobjekt haltern. Auf diese Weise können insbesondere die zuvor erwähnten Kombinationen verschiedener oder gleichartiger Filter im Strahlengang erzielt werden. Auch kann das Kalibrierobjekt gemeinsam mit einem oder mehreren Filtern in dem Strahlengang platziert werden, um z.B. realistische Messbedingungen zu simulieren.

Insbesondere weist die Halterung oder zumindest eines der beweglichen Teile der Halterung eine fensterartige Konfiguration auf, wobei in der Fensteröffnung das Filter oder das Kalibrierobjekt angeordnet ist. Eine fensterartige Konfiguration hat den Vorteil, dass ein umlaufender Rahmen ausgebildet ist, so dass das Filter oder das Kalibrierobjekt mechanisch stabil gehaltert sein kann. Insbesondere wird das Filter oder das Kalibrierobjekt zwischen zwei Teile des Fensterrahmens eingespannt und somit gehaltert, wobei die beiden Teile des Fensterrahmens entlang der Ausbreitungsrichtung für die elektromagnetische Strahlung hintereinander liegen. Auf diese Weise kann ein in sich geschlossen umlaufender Rand des Filters bzw. des Kalibrierobjekts eingespannt sein. Zum Einspannen können die Rahmenteile beispielsweise miteinander verschraubt werden, wobei sich auch die Längsachse der Schrauben parallel oder etwa parallel zum Strahlengang der elektromagnetischen Strahlung erstrecken.

## Patentansprüche

1. Verfahren zum Betreiben einer Anordnung, die ausgestaltet ist, elektromagnetische Strahlung, insbesondere Röntgenstrahlung oder extreme Ultraviolett-Strahlung, zu erzeugen, wobei
- Teilchen, insbesondere Elektronen, mittels einer einstellbaren Fokussierungseinrichtung (22) auf ein Target (5) gelenkt werden, so dass durch die Teilchen in dem Target (5) die elektromagnetische Strahlung erzeugt wird,
- Objekte (26, 70) von der elektromagnetischen Strahlung durchstrahlt werden und ein Durchstrahlungsbild der Objekte aufgenommen wird,
**dadurch gekennzeichnet, dass**
- Durchstrahlungsbilder eines Messobjekts (26) aufgenommen werden und wobei zur Einstellung der Fokussierungseinrichtung (22) zusätzlich zu dem Messobjekt (26) vorübergehend auch ein Kalibrierobjekt (70) in den Strahlengang der elektromagnetischen Strahlung eingebracht wird, ohne das Messobjekt (26) aus dem Strahlengang zu entfernen,
- wobei das Kalibrierobjekt (70) unter Verwendung einer beweglichen Halterung (78) in eine vorgegebene Position relativ zu dem Target (5) in den Strahlengang der elektromagnetischen Strahlung eingebracht wird und wobei das Kalibrierobjekt (70) durch Betätigung der Halterung (78) aus dem Strahlengang entfernt wird,
- das Durchstrahlungsbild oder eine Mehrzahl der Durchstrahlungsbilder automatisch ausgewertet werden und
- in Abhängigkeit von der Auswertung die Fokussierungseinrichtung (22) eingestellt wird.

2. Verfahren nach dem vorhergehenden Anspruch, wobei die Fokussierungseinrichtung (22) in Abhängigkeit von der Auswertung so eingestellt wird, dass eine in einem resultierenden Durchstrahlungsbild erzielte örtliche Auflösung und/oder ein Bildkontrast des resultierenden Durchstrahlungsbildes auf einen vorgegebenen Wert und/oder auf das Maximum geregelt wird.

3. Verfahren nach einem der vorhergehenden Ansprüche, wobei durch Betätigung der Halterung (26) wahlweise ein oder mehrere Filter zur Filterung der Strahlung und/oder das Kalibrierobjekt in den Strahlengang der elektromagnetischen Strahlung eingebracht werden.

4. Verfahren nach einem der vorhergehenden Ansprüche, wobei das Kalibrierobjekt näher als das Messobjekt (26) an dem Target (5) angeordnet wird.

5. Verfahren nach dem vorhergehenden Anspruch, wobei das Kalibrierobjekt (70) an einer Strahlungserzeugungseinrichtung angeordnet wird, die das Target (5) aufweist.

6. Verfahren nach einem der vorhergehenden Ansprüche, wobei das Kalibrierobjekt Strukturen (71, 73) aufweist, die durch Kanten eines Materialbereichs (72, 74) oder durch Kanten und/oder Ränder mehrerer Materialbereiche (72, 74) gebildet werden, und wobei bei der Auswertung des zumindest einen Durchstrahlungsbildes in dem jeweiligen Bild entlang einer Linie, die quer zu einem durch die Kanten erzeugten Kantenprofil verläuft, eine Änderung von Bildwerten, insbesondere von Grauwerten, ausgewertet wird und abhängig von der Änderung die Fokussierungseinrichtung (22) eingestellt wird.

7. Verfahren nach dem vorhergehenden Anspruch, wobei die Änderung der Bildwerte entlang zweier verschiedener, quer zueinander verlaufender Linien (91, 92) in dem jeweiligen Bild ausgewertet wird.

8. Anordnung zur Erzeugung elektromagnetischer Strahlung, insbesondere Röntgenstrahlung oder extreme Ultraviolett-Strahlung, wobei die Anordnung Folgendes aufweist:
- eine einstellbare Fokussierungseinrichtung (22), die ausgestaltet ist, Teilchen, insbesondere Elektronen, auf ein Target (5) zu lenken, so dass durch die Teilchen in dem Target (5) die elektromagnetische Strahlung erzeugt wird,
- eine Bildaufnahmeeinrichtung (23) zum Aufnehmen von Durchstrahlungsbildern von Objekten, die von der elektromagnetischen Strahlung durchstrahlt werden,
**gekennzeichnet durch**
- eine bewegliche Halterung (25) mit einem von der Halterung (25) gehaltenen Kalibrierobjekt (70), wobei die Halterung (25) derart beweglich ist, dass **durch** Betätigung der Halterung (25) das Kalibrierobjekt in eine vorgegebene Position relativ zu dem Target (5) in den Strahlengang der elektromagnetischen Strahlung eingebracht werden kann, so dass das Kalibrierobjekt **durch** Betätigung der Halterung (25) aus dem Strahlengang entfernt werden kann und wieder in die vorgegebene Position gebracht werden kann,
- eine Auswertungseinrichtung (35), die mit der Bildaufnahmeeinrichtung (23) verbunden ist und die ausgestaltet ist, das Durchstrahlungsbild oder eine Mehrzahl der Durchstrahlungsbilder automatisch auszuwerten, wobei das oder die Durchstrahlungsbilder sowohl ein Messobjekt (26) als auch das Kalibrierobjekt zeigen, und
- eine Einstelleinrichtung (33), die mit der Auswertungseinrichtung (35) verbunden ist und die ausgestaltet ist, die Fokussierungseinrichtung (22) abhängig von einem Ergebnis der Auswertung in der Auswertungseinrichtung (35) einzustellen.

9. Anordnung nach dem vorhergehenden Anspruch, wobei die Einstelleinrichtung (33) ausgestaltet ist, die Fokussierungseinrichtung (22) in Abhängigkeit von der Auswertung so einzustellen, dass eine in einem resultierenden Durchstrahlungsbild erzielte örtiche Auflösung und/oder ein Bildkontrast des resultierenden Durchstrahlungsbildes auf einen vorgegebenen Wert und/oder auf das Maximum geregelt wird.

10. Anordnung nach einem der vorhergehenden Ansprüche, wobei die Halterung (25) außerdem ein oder mehrere Filter zur Filterung der Strahlung aufweist und wobei die Halterung (25) so ausgestaltet ist, dass durch Betätigung der Halterung (25) wahlweise ein oder mehrere Filter und/oder das Kalibrierobjekt in den Strahlengang der elektromagnetischen Strahlung eingebracht werden können.

11. Anordnung nach einem der vorhergehenden Ansprüche, mit einem Kalibrierobjekt (70), das Strukturen (71, 73) aufweist, die durch Kanten eines Materialbereichs (72, 74) oder durch Kanten und/oder Ränder mehrerer Materialbereiche (72, 74) gebildet werden.

12. Anordnung nach dem vorhergehenden Anspruch, wobei die Strukturen eine erste Teil-Struktur (71) und eine zweite Teil-Struktur (73) aufwelsen, wobei Abstände der Kanten und/oder der Ränder in der ersten Teil-Struktu (71) größer sind als in der zweiten Teil-Struktur (73).

13. Anordnung nach dem vorhergehenden Anspruch, wobei sich die Kanten und/oder Ränder der ersten Teil-Struktur (71) und der zweiten Teil-Struktur (73) bezogen auf einen Ausbreitungsraum der elektromagnetischen Strahlung in verschiedenen Raumwinkelbereichen erstrecken, so dass gleichzeitig ein Durchstrahlungsbild der ersten Teil-Struktur (71) und der zweiten Teil-Struktur (73) aufgenommen werden kann.

14. Anordnung nach einem der beiden vorhergehenden Anspruch, wobei die zweite Teil-Struktur (73) im Strahlengang der elektromagnetischen Strahlung näher an dem Target (5) angeordnet ist als die erste Tell-Struktur (71).

15. Anordnung nach einem der vier vorhergehenden Ansprüche, wobei die Strukturen (71, 73) so angeordnet sind, dass sich die Kanten und/oder Ränder quer zur Ausbreitungsrichtung der elektromagnetischen Strahlung und ungefähr in einer Richtung erstrecken, die von der optischen Achse der Strahlung radial nach außen verläuft.

16. Anordnung nach einem der fünf vorhergehenden Ansprüche, wobei das oder die Materialbereiche (72, 74), das/die die Kanten und/oder Ränder bildet/bilden, auf einem für die elektromagnetische Strahlung transparenten Trägermaterial (75, 76), insbesondere aus Glaskohlenstoff, angeordnet ist/sind.

## Claims

1. A method for operating an arrangement configured for producing electromagnetic radiation, in particular X-ray radiation or extreme ultraviolet radiation, wherein
- particles, in particular electrons, are directed onto a target (5) by means of an adjustable focusing device (22), such that the electromagnetic radiation is produced by the particles in the target (5),
- the electromagnetic radiation radiates through objects (26, 70) and a radiograph of the objects is recorded,
**characterized in that**
- radiographs of a measurement object (26) are recorded and wherein, for adjusting the focusing device (22), in addition to the measurement object (26), a calibration object (70) is temporarily also introduced into the beam path of the electromagnetic radiation, without the measurement object (26) being removed from the beam path,
- wherein the calibration object (70) is introduced, using a movable mount (78) into a predetermined position relative to the target (5) into the beam path of the electromagnetic radiation and wherein the calibration object (70) is removed from the beam path by actuation of the mount (78),
- the radiograph or a plurality of the radiographs are evaluated automatically, and
- the focusing device (22) is adjusted depending on the evaluation.

2. The method as claimed in the preceding claim, wherein the focusing device (22) is adjusted depending on the evaluation such that a spatial resolution obtained in a resulting radiograph and/or an image contrast of the resulting radiograph is regulated to a predetermined value and/or to the maximum.

3. The method as claimed in any of the preceding claims, wherein optionally one or a plurality of filters for filtering the radiation and/or the calibration object are introduced into the beam path of the electromagnetic radiation by actuation of the mount (25).

4. The method as claimed in any of the preceding claims, wherein the calibration object is arranged nearer to the target (5) than the measurement object (26).

5. The method as claimed in the preceding claim, wherein the calibration object (70) is arranged at a radiation producing device comprising the target (5).

6. The method as claimed in any of the preceding claims, wherein the calibration object has structures (71, 73) formed by edges of a material region (72, 74) or by edges and/or margins of a plurality of material regions (72, 74), and wherein, during the evaluation of the at least one radiograph, in the respective image along a line running transversely with respect to an edge profile produced by the edges, a change in image values, in particular in grey-scale values, is evaluated and the focusing device (22) is adjusted depending on the change.

7. The method as claimed in the preceding claim, wherein the change in the image values along two different lines (91, 92) running transversely with respect to one another in the respective image is evaluated.

8. An arrangement for producing electromagnetic radiation, in particular X-ray radiation or extreme ultraviolet radiation, wherein the arrangement has the following:
- an adjustable focusing device (22) configured for directing particles, in particular electrons, onto a target (5), such that the electromagnetic radiation is produced by the particles in the target (5),
- an image recording device (23) for recording radiographs of objects through which the electromagnetic radiation radiates,
**characterized by**
- a movable mount (25) with a calibration object (70) held by the mount (25), wherein the mount (25) is movable in such a way that the calibration object can be introduced into a predetermined position relative to the target (5) into the beam path of the electromagnetic radiation by actuation of the mount (25), such that the calibration object can be removed from the beam path by actuation of the mount (25) and can be returned to the predetermined position,
- an evaluation device (35), which is connected to the image recording device (23) and which is configured for automatically evaluating the radiograph or a plurality of the radiographs, wherein the radiograph or radiographs show both a measurement object (26) and the calibration object, and
- an adjusting device (33), which is connected to the evaluation device (35) and which is configured for adjusting the focusing device (22) depending on a result of the evaluation in the evaluation device (35).

9. The arrangement as claimed in the preceding claim, wherein the adjusting device (33) is configured for adjusting the focusing device (22) in a manner dependent on the evaluation such that a spatial resolution obtained in a resulting radiograph and/or an image contrast of the resulting radiograph is regulated to a predetermined value and/or to the maximum.

10. The arrangement as claimed in any of the preceding claims, wherein the mount (25) additionally has one or a plurality of filters for filtering the radiation and wherein the mount (25) is configured such that optionally one or a plurality of filters and/or the calibration object can be introduced into the beam path of the electromagnetic radiation by actuation of the mount (25).

11. The arrangement as claimed in any of the preceding claims, comprising a calibration object (70) having structures (71, 73) formed by edges of a material region (72, 74) or by edges and/or margins of a plurality of material regions (72, 74).

12. The arrangement as claimed in the preceding claim, wherein the structures have a first partial structure (71) and a second partial structure (73), wherein distances between the edges and/or the margins are larger in the first partial structure (71) than in the second partial structure (73).

13. The arrangement as claimed in the preceding claim, wherein the edges and/or margins of the first partial structure (71) and of the second partial structure (73) extend in different solid angle ranges relative to a propagation space of the electromagnetic radiation, such that a radiograph of the first partial structure (71) and of the second partial structure (73) can be recorded simultaneously.

14. The arrangement as claimed in either of the two preceding claims, wherein the second partial structure (73) is arranged nearer to the target (5) than the first partial structure (71) in the beam path of the electromagnetic radiation.

15. The arrangement as claimed in any of the four preceding claims, wherein the structures (71, 73) are arranged such that the edges and/or margins extend transversely with respect to the propagation direction of the electromagnetic radiation and approximately in a direction which runs radially outward from the optical axis of the radiation.

16. The arrangement as claimed in any of the five preceding claims, wherein the material region or material regions (72, 74) forming the edges and/or margins is/are arranged on a carrier material (75, 76) transparent to the electromagnetic radiation, in particular composed of glassy carbon.

## Revendications

1. Procédé pour faire fonctionner un système, qui est agencé pour générer un rayonnement électromagnétique, en particulier des rayons X ou un rayonnement ultraviolet extrême, dans lequel
- des particules, en particulier des électrons, sont déviées sur une cible (5) au moyen d'une installation de focalisation réglable (22) de sorte que le rayonnement électromagnétique soit généré par les particules dans la cible (5),
- des objets (26, 70) sont traversés par le rayonnement électromagnétique et une radiographie des objets est prise,
**caractérisé en ce que**
- des radiographies d'un objet à mesurer (26) sont prises et dans lequel, pour le réglage de l'installation de focalisation (22), un objet de calibrage (70) est amené en plus de l'objet à mesurer (26) provisoirement dans la trajectoire du rayonnement électromagnétique sans retirer l'objet à mesurer (26) de la trajectoire des rayons,
- dans lequel l'objet de calibrage (70) est amené à l'aide d'un support mobile (78) à une position prédéfinie, relativement à la cible (5) dans la trajectoire du rayonnement électromagnétique et dans lequel l'objet de calibrage (70) est retiré de la trajectoire des rayons par un actionnement du support (78),
- la radiographie ou une pluralité de radiographies sont évaluées automatiquement et
- l'installation de focalisation (22) est réglée en fonction de l'évaluation.

2. Procédé selon la revendication précédente, dans lequel l'installation de focalisation (22) est réglée en fonction de l'évaluation de sorte qu'une résolution locale obtenue dans une radiographie résultante et/ou un contraste d'image de la radiographie résultante soient réglés sur une valeur prédéfinie et/ou sur le maximum.

3. Procédé selon l'une quelconque des revendications précédentes, dans lequel, au choix, un ou plusieurs filtres servant à filtrer le rayonnement et/ou l'objet de calibrage sont amenés, par un actionnement du support (25), dans la trajectoire du rayonnement électromagnétique.

4. Procédé selon l'une quelconque des revendications précédentes, dans lequel l'objet de calibrage est disposé plus près de la cible (5) que l'objet à mesurer (26).

5. Procédé selon l'une quelconque des revendications précédentes, dans lequel l'objet de calibrage (70) est disposé au niveau d'une installation de génération de rayonnement qui comporte la cible (5).

6. Procédé selon l'une quelconque des revendications précédentes, dans lequel l'objet de calibrage présente des structures (71, 73) qui sont formées par des arêtes d'un secteur matériel (72, 74) ou par des arêtes et/ou des bords de plusieurs secteurs matériels (72, 74), et dans lequel, lors de l'évaluation de ladite au moins une radiographie dans l'image respective le long d'une ligne, qui est perpendiculaire à un profil d'arête généré par les arêtes, une modification des valeurs d'image, en particulier des valeurs de gris, est évaluée et l'installation de focalisation (22) est réglée en fonction de la modification.

7. Procédé selon l'une quelconque des revendications précédentes, dans lequel la modification des valeurs d'image est évaluée dans l'image respective le long de deux lignes différentes, perpendiculaires entre elles (91, 92).

8. Système de génération d'un rayonnement électromagnétique, en particulier de rayons X ou d'un rayonnement ultraviolet extrême, dans lequel le système comprend les éléments suivantes :
- une installation de focalisation réglable (22) qui est agencée pour dévier des particules, en particulier des électrons, sur une cible (5) de sorte que le rayonnement électromagnétique soit généré par les particules dans la cible (5),
- une installation de prise d'image (23) servant à prendre des radiographies d'objets qui sont traversés par le rayonnement électromagnétique,
**caractérisé en ce que**
- un support (25) mobile ayant un objet de calibrage (70) maintenu par le support (25), dans lequel le support (25) est mobile de manière telle que, par un actionnement du support (25), l'objet de calibrage puisse être amené à une position prédéfinie relativement à la cible (5) dans la trajectoire du rayonnement électromagnétique de sorte que l'objet de calibrage puisse être retiré de la trajectoire des rayons par l'actionnement du support (25) et puisse être remis à la position prédéfinie,
- une installation d'évaluation (35) qui est reliée à l'installation de prise d'image (23) et qui est agencée pour évaluer automatiquement la radiographie ou une pluralité des radiographies, dans lequel la ou les radiographies montrent aussi bien un objet à mesurer (26) qu'un objet de calibrage, et
- une installation de réglage (33) qui est reliée à l'installation d'évaluation (35) et qui est agencée pour régler l'installation de focalisation (22) en fonction d'un résultat de l'évaluation dans l'installation d'évaluation (35).

9. Système selon la revendication précédente, dans lequel l'installation de réglage (33) est agencée pour régler l'installation de focalisation (22) en fonction de l'évaluation de sorte qu'une résolution locale obtenue dans une radiographie résultante et/ou un contraste d'image de la radiographie résultante soient réglés sur une valeur prédéfinie et/ou sur le maximum.

10. Système selon l'une quelconque des revendications précédentes, dans lequel le support (25) comporte en outre un ou plusieurs filtres servant au filtrage du rayonnement et dans lequel le support (25) est agencé de sorte que, au choix, un ou plusieurs filtres et/ou l'objet de calibrage puissent être amenés, par un actionnement du support (25), dans la trajectoire du rayonnement électromagnétique.

11. Système selon l'une quelconque des revendications précédentes, ayant un objet de calibrage (70) qui présente des structures (71, 73) qui sont formées par des arêtes d'un secteur matériel (72, 74) ou par des arêtes et/ou des bords de plusieurs secteurs matériels (72, 74).

12. Système selon l'une quelconque des revendications précédentes, dans lequel les structures comprennent une première structure partielle (71) et une deuxième structure partielle (73), dans lequel des écarts entre des arêtes et/ou des bords dans la première structure partielle (71) sont plus grands que dans la deuxième structure partielle (73).

13. Système selon l'une quelconque des revendications précédentes, dans lequel les arêtes et/ou les bords de la première structure partielle (71) et de la deuxième structure partielle (73) s'étendent par rapport à un espace de propagation du rayonnement électromagnétique dans différents secteurs d'angle solide de sorte qu'une radiographie de la première structure partielle (71) et de la deuxième structure partielle (73) puisse être prise simultanément.

14. Système selon l'une quelconque des revendications précédentes, dans lequel la deuxième structure partielle (73) est disposée dans la trajectoire du rayonnement électromagnétique plus près de la cible (5) que la première structure partielle (71).

15. Système selon l'une quelconque des revendications précédentes, dans lequel les structures (71, 73) sont disposées de sorte que les arêtes et/ou les bords s'étendent perpendiculairement à une direction de propagation du rayonnement électromagnétique et à peu près dans une direction qui s'éloigne radialement de l'axe optique du rayonnement.

16. Système selon l'une quelconque des cinq revendications précédentes, dans lequel le ou les secteurs matériels (72, 74) qui forment les arêtes et/ou les bords, sont disposés sur un matériau support (75, 76) transparent, en particulier en carbone vitreux, pour le rayonnement électromagnétique.
